# EUROPEAN PATENT SPECIFICATION

(11) **EP 4 435 243 B1**
(45) Date of publication and mention of the grant of the patent: **02.12.2026**
(21) Application number: 22962278.2
(22) Date of filing: 17.10.2022
(51) Int. Cl.: F02C 7/14, F16K 11/074, B60K 11/02, F01P 7/16, F16K 27/04

(54) **THERMAL MANAGEMENT SYSTEM AND VALVE THEREOF**
WÄRMEVERWALTUNGSSYSTEM UND VENTIL DAFÜR
SYSTÈME DE GESTION THERMIQUE ET SOUPAPE ASSOCIÉE

(43) Date of publication of application: 25.09.2024
(73) Proprietor: Johnson Electric International AG, 3280 Murten (CH)
(72) Inventor: CHEN, Anbang, Shenzhen, Guangdong 518125 (CN); QU, Tao, Shenzhen, Guangdong 518125 (CN); TAO, Xiaohe, Shenzhen, Guangdong 518125 (CN); WANG, Dong, Shenzhen, Guangdong 518125 (CN); ZHAO, Yong, Shenzhen, Guangdong 518125 (CN); LIU, Xiaoyu, Shenzhen, Guangdong 518125 (CN); WANG, Haitao, Shenzhen, Guangdong 518125 (CN); QIN, Ruifeng, Shenzhen, Guangdong 518125 (CN)
(74) Representative: Doherty, William
(86) International application number: PCT/CN2022/125561
(87) International publication number: WO 2024/082078

(56) References cited:
- CA-A1- 3 094 865
- CN-A- 113 374 893
- CN-A- 114 517 842
- CN-A- 114 738 511
- CN-U- 215 950 468
- CN-U- 215 950 468
- CN-U- 216 692 256
- CN-U- 217 539 713
- JP-A- 2014 185 662
- JP-A- 2020 180 623
- US-A1- 2004 011 879
- US-A1- 2005 034 688
- US-A1- 2011 067 772
- US-A1- 2017 152 956
- US-A1- 2021 080 027

## Description

### FIELD OF THE INVENTION

This application relates to the field of heat exchange technology, in particular to a thermal management system and a valve thereof.

### BACKGROUND

For electric vehicles, there are diverse thermal management demands for different parts, such as cooling the traction motor, cooling or heating the battery under different operating conditions, and cooling or heating the passenger cabinet during different seasons. Therefore, the thermal management system of electric vehicles includes multiple fluid circuits for heat exchange medium, such as motor fluid circuit, battery fluid circuit, passenger cabinet fluid circuit, etc., and under different working conditions, the heat exchange medium has different flow controlling requirement in each fluid circuit.

The flow direction of heat exchange medium in the fluid circuit is controlled by valves, but existing valves are difficult to fully satisfy the heat exchange demands of multiple fluid circuits and working conditions. This not only results in low heat exchange efficiency and serious waste of electrical energy, but also to some extent a limit of improvement of electric vehicle range, especially in special situations such as low temperature.

US 2004/0011879 A1 discloses a cartridge for sanitary appliances, which is known to house the control elements for sanitary fittings in cartridges, which are self-contained. CA 3094865 A1 relates to valves, and more specifically mixing valves, the mixing valves being configured to admit separate inflows of hot water and cold water, mix the hot water and cold water, and output a combined outflow of hot and cold mixed water. US 2017/0152956 A1 discloses a fluid control valve for mixing hot and cold water having an inlet for cold water, and inlet for hot water, and at least one outlet for temperature-controlled water. CN 113374893 A discloses a temperature control valve element being characterised by comprising a shell, a static ceramic chip, an adjusting assembly and a switch assembly. CN 114517842 A relates to a water treatment multifunctional filter valve which comprises a valve body, a movable valve plate, a fixed valve plate and a driving device, the device aiming to solve the technical problem that the effective area of a water inlet and outlet hole in a valve body cannot concisely and effectively reach the effective area of a water inlet and outlet pipe opening outside the valve body. US 2011/0067772 A1 discloses a flow path switching valve arranged to rotate a main valve with an auxiliary valve to switch a cooling state and a heating state. CN 215950468 U relates to a multi-port valve and a thermal management system with the multi-port valve. US 2021/0080027 A1 discloses a thermal management system for an electrified vehicle including, among other things, a valve, a radiator loop configured to be connected to the valve, a power electronics loop configured to be connected to the valve, a battery loop configured to be connected to the valve, and a battery loop configured to connect to the valve.

### SUMMARY OF THE INVENTION

The present disclosure aims to provide a thermal management system and valve thereof that can effectively satisfy the heat exchange needs under various working conditions
In one aspect, the present disclosure provides a valve including a valve house and a valve core rotatably mounted in the valve house. The valve house is hollow cylindrical as a whole, and comprises a base plate, an annular side wall that extends vertically from the outer edge of the base plate and a cover plate covered on the annular side wall, a plurality of inner valve ports and a plurality of outer valve ports are defined in the base plate of the valve house; the inner valve ports and the outer valve ports are arranged at intervals along the circumference of valve house, that is located at one axial side end of the valve house; the inner valve ports are located on a radial inner side of the outer valve ports; characterised in that the valve core defines a plurality of inner flow channels and a plurality of outer flow channels extending through one of two axial ends of the valve core facing the base plate of the valve house; the inner flow channels are located at a radial inner side of the outer flow channels, and are not in communication with each other inside the valve core, each of the inner flow channels is configured to align and communicate with two of the inner valve ports in an axial direction to enable the two inner valve ports to be interconnected with each other, the widths of the inner flow channels in the circumferential direction are equal and are greater than the width of each of the inner valve ports to enable each of the inner flow channels to be aligned with and then in fluid communication with at least two adjacent inner valve ports at the same time; each of the outer flow channels is configured to align and communicate with two of the outer valve ports in the axial direction to enable the two outer valve ports to be interconnected with each other, the plurality of outer flow channels comprises a first outer flow channel, a second outer flow channel, and a third outer flow channel, the widths of the first, second and third outer flow channels in a circumferential direction are equal and are greater than the width of each of the outer valve ports in the circumferential direction to enable each of the outer flow channels to be aligned with and then in fluid communication with at least two adjacent outer valve ports at the same time; in response to the valve core rotating to different positions relative to the valve house, the inner flow channels selectively communicate with different inner valve ports, and the outer flow channel selectively communicate with different outer valve ports.

Preferably, each of the inner valve ports outer valve port is sector-annular, and each of the inner flow channels and outer flow channels is sector-annular; all of the inner valve ports are arranged on a circle, and all of the outer valve ports are arranged on a circle; all of the inner flow channels are arranged on a circle which overlaps axially with the circle where the inner valve ports are located, and all of the outer flow channels are arranged on a circle, which overlaps axially with the circle where the outer valve ports are located.

Preferably, a circumferential width of each of the outer flow channels is 2 times that of each of the outer valve ports; a circumferential width of each of the inner flow channels is 3 times that of each of the outer valve ports; a circumferential width of one of the inner valve ports is equivalent to that of the outer valve ports, and a width of another one of the inner valve ports is 2 times that of the outer valve ports.

Preferably, the valve core further comprises a shared flow channel E0, and the shared flow channel extends radially through both of the circles on which the inner flow channel and the outer flow channel are respectively located and is configured to enable a fluid communication between selected one of the inner valve ports and one of the outer valve ports.

Preferably, the valve core defines a first air hole and a second air hole, the first air hole is located on the circle where the inner flow channels are located and communicates with one of the inner flow channels, and the second air hole is located on the circle where the outer flow channel are located and communicates with one of the outer flow channels.

Preferably, a dynamic friction ring is mounted to an axial end of the valve core, a static friction ring is installed inside the valve house, the dynamic friction ring and the static friction ring axially abuts against each other to form a dynamic seal therebetween.

In another aspect, the present disclosure provides a thermal management system comprising a first fluid circuit, a second fluid circuit, a third circuit and the valve above, the first fluid circuit is connected to at least two of inner valve ports of the valve; the second fluid circuit is connected to at least two of the inner valve ports of valve, but different from the inner ports connected to the first fluid circuit; the third circuit is connected to at least two of the outer valve ports of the valve.

Preferably, a traction motor and a radiator are connected in series in the first fluid circuit, an inlet of the traction motor is defined as a first inlet of the first fluid circuit, an outlet of the radiator is defined as a first outlet of the first fluid circuit; the first inlet and the first outlet of the first fluid circuit are respectively connected to two of the inner valve ports of the valve; a battery and a chiller are connected in series in the second fluid circuit, an inlet of the battery is defined as a second inlet of the second fluid circuit, an outlet of the chiller is defined as a second outlet of the second fluid circuit; the second inlet and the second outlet of the second fluid circuit are respectively connected to two of the inner valve ports, but different from the inner valve ports connected to the first fluid circuit; a heater and a blower warming core are connected in series in the third fluid circuit, an inlet of the heater is defined as a third inlet of the third circuit, an outlet of blower warming core is defined as a third outlet of the third circuit; the third inlet and the third outlet of the third circuit are respectively connected to two of the outer valve ports of the valve.

Preferably, a first tee joint is arranged between an outlet of the traction motor and an inlet of the radiator, input and outport ports of the first tee joint is connected to three of the inner valve ports of valve respectively; a second tee joint is arranged between an outlet of the battery and an inlet of the chiller, input and out port output ports of the second tee joint are connected to other three inner valve ports of the valve respectively; a third tee joint is arranged between the outlet of the heater and the inlet of the blower warming core, input and output ports of the third tee joint are respectively connected two the three outer valve ports of the valve.

Preferably, the chiller is provided with a first fluid path, a second fluid path and a third fluid path; the first fluid path is connected between the third tee joint and the corresponding outer valve port of the valve; the second fluid path is connected between the second tee joint and the corresponding one of the inner valve ports; the third fluid path is provided for flow of refrigerant.

Preferably, the chiller is made up of two heat exchanging units, one of which is provided with the first fluid path and the second fluid path, and the other one is provided with the second fluid path and the third fluid path.

Preferably, the plurality of inner valve ports comprises a first inner valve port, a second inner valve port, a third inner valve port, a fourth inner valve port, a fifth inner valve port and a sixth inner valve port, the first inner valve port is located between the second inner valve port and the third inner valve port in a circumferential direction, and the fourth inner valve port is located between the fifth inner valve port and the sixth inner valve port in a circumferential direction; the plurality of outer valve ports comprises a first outer valve port, a second outer valve port and a third outer valve port, and the first outer valve port is located between the second outer valve port and the third outer valve port in a circumferential direction; the first inlet, the first outlet of the first fluid circuit and the first tee joint are directly connected to the first inner valve port, the second inner valve port and the sixth inner valve port, respectively; the second inlet, the second outlet of the second fluid circuit and the second tee joint are directly connected to the fourth inner valve port, the fifth inner valve port and the third inner valve port, respectively; the third inlet and the third outlet of the third fluid circuit are respectively connected to the second outer valve port and the first outer valve port, and the third tee joint is connected to the third outer valve port through the chiller.

Preferably, the thermal management system is configured to be switched among at least the following: a first work mode, wherein the first inner valve port of the valve is in fluid communication with the second inner valve port, and the fourth inner valve port is in communication with the fifth inner valve port, and the first outer valve port is in communication with the second outer valve port; a second work mode, wherein the first inner valve port of the valve is in fluid communication with the second inner valve port, and the fourth inner valve port is in fluid communication with the fifth inner valve port, and the first outer valve port is in fluid communication with the third outer valve port; a third working state, wherein the first inner valve port of the valve is in fluid communication with the third inner valve port, and the fourth inner valve port is in fluid communication with the sixth inner valve port, and the first outer valve port is in fluid communication with the second outer valve port; a fourth work mode, wherein the first inner valve port of the valve is in fluid communication with the fifth inner valve port, the fourth inner valve port is in fluid communication with the second inner valve port, and the first outer valve port is in fluid communication with the second outer valve port; a fifth work mode: wherein the first inner valve port of the valve is in fluid communication with the second inner valve port, the fourth inner valve port is in fluid communication with the fifth inner valve port, and the first outer valve port is in fluid communication with both of the second outer valve port and the third outer valve port simultaneously; a sixth work mode, wherein the first inner valve port is in fluid communication with both of the third inner valve port and the fifth inner valve port of the valve simultaneously; the fourth inner valve port is in fluid communication with both of the second inner valve port and the sixth inner valve port simultaneously; the first outer valve port is in fluid communication with both of the second outer valve port and the third outer valve port simultaneously.

Preferably, a flow ratio via the second outer valve port and the third outer valve port are adjustable in response to the first outer valve port is in fluid communication with both of the second outer valve port and the third outer valve port simultaneously.

### BRIEF DESCRIPTION OF THE DRAWINGS

Figure 1 is a perspective view of a valve according to a first embodiment of the present invention.
Figure 2 is an exploded view of the valve shown in figure 1.
Figure 3 is another perspective view of the valve in figure 1 shown in a different aspect.
Figure 4 is an exploded view of the valve shown in figure 3.
Figure 5 is a cross-sectional view of figure 3 along line V-V.
Figure 6 is a top plan view of the valve core shown in figure 2.
Figure 7 is a further exploded view of the valve core shown in figure 2.
Figure 8 is a schematic diagram of the flow channel of the valve core of figure 7.
Figure 9 is a schematic diagram showing the valve ports defined in the valve house of the valve shown in figure 2.
Figure 10 is a schematic diagram to illustrate the position relationship between the valve core and valve house in the first work state of the valve.
Figure 11 is a schematic diagram to illustrate the position relationship between the valve core and valve house in the second work state of the valve.
Figure 12 is a schematic diagram to illustrate the position relationship between the valve core and valve house in the third work state of the valve.
Figure 13 is a schematic diagram to illustrate the position relationship between the valve core and valve house in the fourth work state of the valve.
Figure 14 is a schematic diagram to illustrate the position relationship between the valve core and valve house in the fifth work state of the valve.
Figure 15 is a schematic diagram to illustrate the position relationship between the valve core and valve house in the sixth work state of the valve.
Figure 16 is a schematic diagram to illustrate the position relationship between the valve core and valve house in the seventh work state of the valve.
Figure 17 is a schematic diagram of a thermal management system according to a first embodiment of the present invention.
Figure 18 is a schematic diagram to illustrate on/off statues of the fluid circuits of the thermal management system when the valve in the first work state.
Figure 19 is a schematic diagram to illustrate on/off statues of the fluid circuits of the thermal management system when the valve in the second work state.
Figure 20 is a schematic diagram to illustrate on/off statues of the fluid circuits of the thermal management system when the valve in the third work state.
Figure 21 is a schematic diagram to illustrate on/off statues of the fluid circuits of the thermal management system when the valve in the fifth work state.
Figure 22 is a schematic diagram to illustrate on/off statues of the fluid circuits of the thermal management system when the valve in the sixth work state.
Figure 23 is a schematic diagram to illustrate on/off statues of the fluid circuits of the thermal management system when the valve in the seventh work state.
Figure 24 is a schematic diagram of the flow channel of the valve core according to a second embodiment of the present application.
Figure 25 is a schematic diagram to illustrate the position relationship between the valve core and valve house in figure 24 in one work state.
Figure 26 is a schematic diagram to illustrate the position relationship between the valve core and valve house of the valve in figure 24 in another one work state.
Figure 27 is a schematic diagram to illustrate the position relationship between the valve core and valve house of the valve in figure 24 in further another one work state.

### DETAILED DESCRIPTION OF THE PREFERRED EMBODIMENTS

The present invention will be further described below based on the drawings and the embodiments.

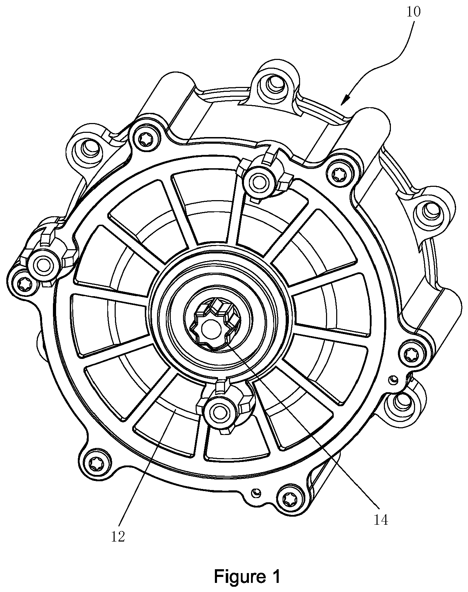

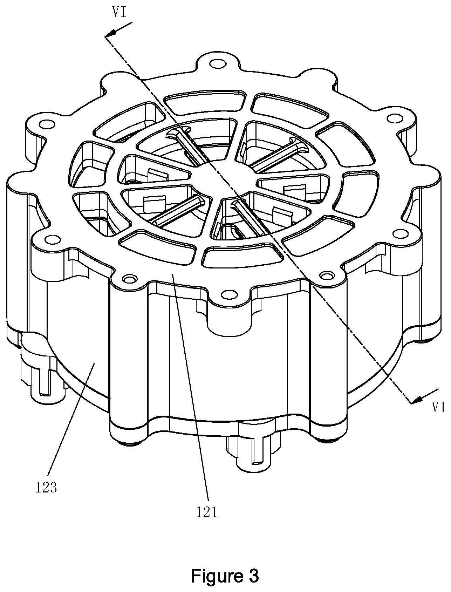

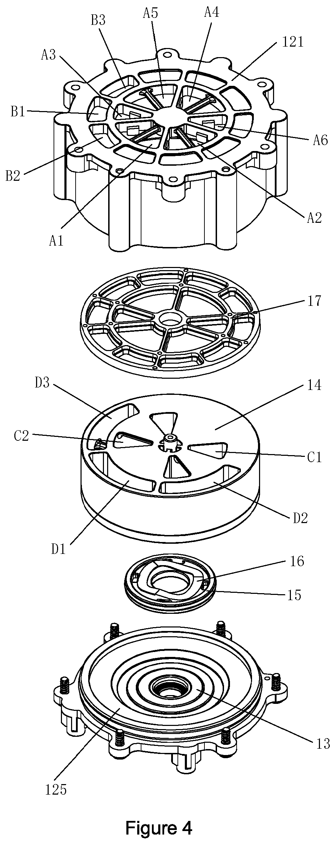

Figures 1-5 show an embodiment of the valve 10 according to the present application. The valve 10 comprises a valve house 12 and a valve core 14 rotatably mounted in the valve house 12. The valve house 12 is provided with a plurality of inner valve ports and outer valve ports, to be connected to different fluid circuits of the thermal management system 100 respectively. The valve core 14 is provided with a plurality of inner flow channels and outer flow channels, for respectively interconnecting the corresponding inner valve ports and/or outer valve port of the valve house 12. With rotation of the valve core 14 relative to the valve house 12, the inner valve port and the outer valve port that the inner flow channel and the outer flow channel connected to are switched, and then the fluid circuits in interconnection are switched accordingly to enable the heat management system 100 to meet the heat exchange demand under various different working conditions. It should be understood that the valve 10 provided in the present application can be applied to control the flow of fluid in any fluid circuit and is not limited to the application in the thermal management system 100.

The valve house 12 is hollow cylindrical as a whole, and comprises a base plate 121, an annular side wall 123 that extends vertically from the outer edge of the base plate 121 and a cover plate 125 covered on the side plate 123. The base plate 121, the side plate 123, and the cover plate 125 are enclosed to define a space to receive the valve core 14. In one embodiment, the base plate 121 and the side wall 123 are integrally formed. The cover plate 125 is fixedly connected to the side wall 123 through screws and the like. The centre of the cover plate 125 forms a through-shaft hole 127 for assembling of the valve core 14. In the embodiment shown in the figure, the inner valve port and the outer valve port are defined in the base plate 121, that is, located at one axial side end of the valve house 12. The inner valve ports comprise a first inner valve port A1, a second inner valve port A2, a third inner valve port A3, a fourth inner valve port A4, a fifth inner valve port A5, and a sixth inner valve port A6. The outer valve ports comprise the first outer valve port B1, the second outer valve port B2, and the third outer valve port B3.

The valve core 14 is cylindrical as a whole and is notably installed in the valve house 12. A shaft 141 protrudes outwards from a side of the valve core 14 facing the cover plate 125 and extends out of the valve house 12 through the through-shaft hole 127 of the cover plate 125. A driving element, such as the motor, is in transmission connection with the shaft 141, to drive valve core 14 rotate relative to the valve house 12 to change the work states of the valve 10. In the embodiment as shown in the figures, the valve core 14 is provided with a plurality of inner and a plurality of outer flow channels respectively extending through an axial end facing the base plate 121. The plurality of inner flow channels comprises a first inner flow channel C1 and a second inner flow channel C2; The plurality of outer flow channels comprises the first outer flow channel D1, the second outer flow channel D2, and the third outer flow channel D3. With the valve core 14 rotates to different positions relative to the valve house 12, the inner flow channel C1 and C2 selectively communicate with different inner valve ports A1~A6, and the outer flow channel D1~D3 selectively communicate with different outer valve ports B1~B3 on, so that the valve 10 presents different work states.

In some embodiments, a static friction ring 13 is arranged on an inner side of the cover plate 125, and the static friction ring 13 is arranged around the shaft rod 141 and is spaced apart from it. The valve core 14 is provided with a dynamic friction ring 15 at the side end facing the cover plate 125, and the dynamic friction ring 15 abuts against the static friction ring 13 in the axial upward direction of the valve 10. The static friction ring 13 is made of good wear-resistant, high-temperature resistant materials, such as ceramics or silicon carbide. The dynamic friction ring 15 is made of a lubricating material with good wear resistance and high temperature resistance, such as polytetrafluoroethylene (PTFE). By arranging the static friction ring 13 and the dynamic friction ring 15, the cover plate 125 and the valve core 14 are axially spaced, so that the friction between the cover plate 125 and the valve core 14 is effectively avoided during rotation. Preferably, an elastic part 16 is mounted between the valve core 14 and the dynamic friction ring 15, such as a wave spring, etc., to provide axial preload and urge the dynamic friction ring 15 and the static friction ring 13 to be tightly fitting with each other to form a dynamic seal. Because coolant may exist in the valve house 12 in some working conditions, the dynamic seal can avoid the coolant leaking through the gap between the shaft 141 and the valve house 12.

In some embodiments, a sealing gasket 17 is sandwiched between the base plate 121 and the valve core 14. The sealing gasket 17 is made of flexible material, such as silastic, etc., to avoid a direct friction between the valve core 14 and the base plate 121 during rotation, and a fluid leakage via the contact surface of the valve core 14 and the base plate 121. The sealing gasket 17 defines a plurality of openings corresponding to the inner valve ports A1~A6, the outer valve ports B1~B3 of the valve house 12 and the inner flow channels C1~C2 and the outer flow channels D1~D3 of the valve core 14, so as to avoid affecting the communication of the inner valve channel C1~C2 and the outer flow channel D1~D3 to the inner valve port A1~A6 and the outer valve port B1~B3. In addition, a sealing piece 18 is mounted around a peripheral surface of the dynamic friction ring 15. Sealing rings 19 are respectively arranged between the shaft 141 and the cover plate 125, and the cover plate 124 and the side plate 123 to enable sealing between every two assembled two various parts of the valve 10. The fluid flows into the valve 10 via a certain one of the inner valve ports A1~A6 and outer valve ports B1~B3 can only flow out of the valve via a desired another one of the inner valve ports A1~A6 and outer valve ports B1~B3.

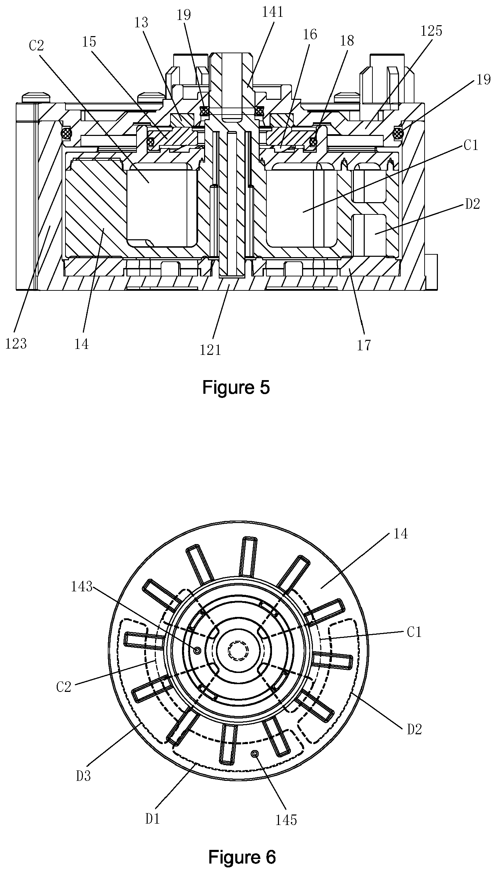

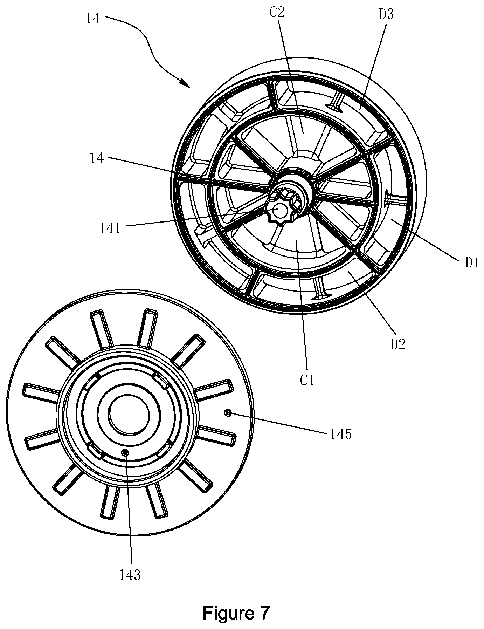

Please refer also to figure 6 to figure 8, the first inner flow channel C1 and the second inner flow channel C2 of the valve core 14 are arranged on a circle and are roughly symmetrical to each other. Each of the first and second inner flow channels C1 and C2 spans a central angle slightly greater than 90 degrees. Each of two interval areas between the first and second inner flow channels C1 and C2 spans a central angle slightly less than 90 degrees. The first outer flow channel D1, the second outer flow channel D2, and the third outer flow channel D3 are arranged on a circle and have same shape and size for each of them. A diameter of the circle where the inner flow channel C1 and C2 are located is smaller than the inner diameter of the circle where outer flow channel D1~D3 are located. That is to say, the first outer flow channel D1, the second flow channel D2, and the third flow channel D3 are located on the radial outer side of the first inner flow channel C1 and the second inner flow channel C2.

In the embodiment as shown in the figures, the first outer flow channel D1 is located between the second outer flow channel D2 and the third outer flow channel D3. The second outer flow channel D2 is positioned closed to an outer side of the first inner flow channel C1; The third outer flow channel D3 is located closed to an outside of the second outer flow channel D2.

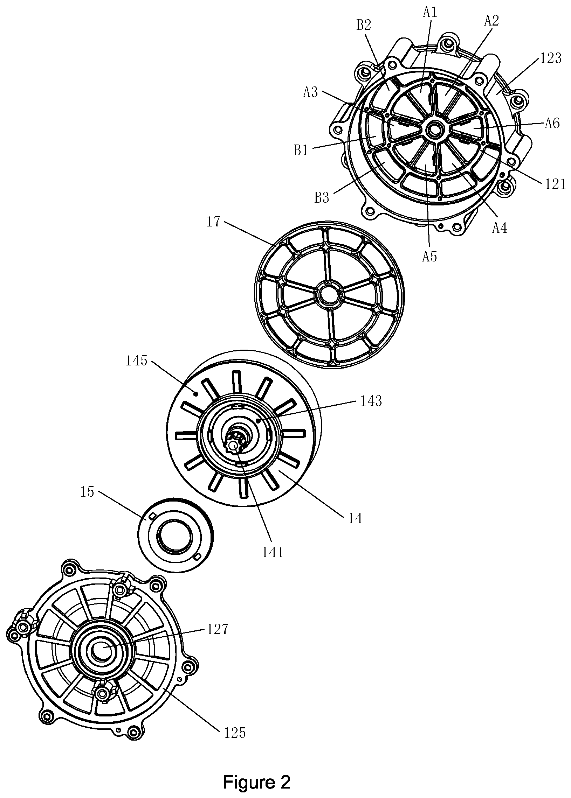

In some embodiments, as shown in figure 2 and figure 6, the valve core 14 is provided with a first air hole 143 and a second air hole 145 at a side end facing the cover plate 125. The first air hole 143 is located on the circle where the inner flow channel C1 and C2 are located and communicates with the second inner flow channel C2, and plays a role of balancing air pressure inside the inner flow channel C1, C2 and the inner valve ports A1~A6 that they are in communication with; The second air hole 145 is located on the circle where the outer flow channels D1~D3 is located and communicates with the first outer flow channel D1, and help to balance air pressure inside the outer flow channels D1~D3 and the external valve ports B1~B3 that they are in communication with. Therefore, the heat exchange medium can flow smoothly through the valve 10. In other embodiments, the first air hole 143 can also communicates with the first inner flow channel C1, and the second air hole 145 can communicates with the second outer flow channel D2 or the third outer flow channel D3.

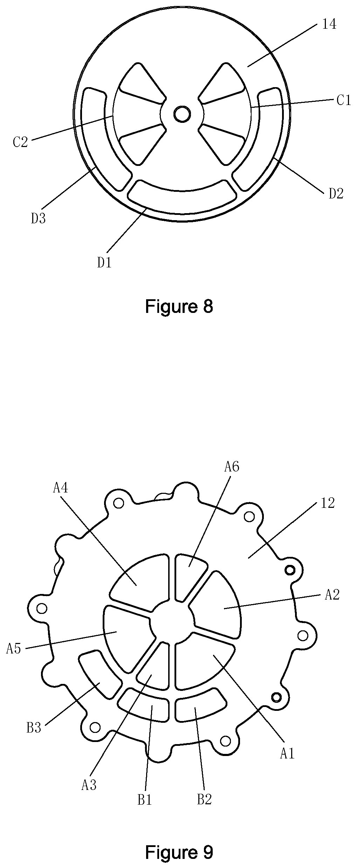

Please also refer to figure 9, the first inner valve port A1, the second inner valve port A2, the third inner valve port A3, the fourth inner valve port A4, the fifth inner valve port A5, the sixth inner valve port A6 are located on a circle and arranged closely one by one along a circumferential direction. The first outer valve port B1, the second outer valve port B2, and the third outer valve port B3 are located on a circle and arranged closely one by one along a circumferential direction. In one embodiment, each inner valve port A1~A6 and each outer valve port B1~B3 is sector-annular, and the outer diameter of each inner valve port A1~A6 is smaller than an inner diameter of each outer valve port B1~B3. In other words, the first inner valve port A1, the second inner valve port A2, the third inner valve port A3, the fourth inner valve port A4, the fifth inner valve port A5, the sixth inner valve port A6 are located on the radial inner side of the first outer valve port B1, the second outer valve port B2, and the third outer valve port B3.

In the embodiment shown in the figures, the first inner valve port A1 is arranged between the second and third inner valve ports A2 and A3, the fourth inner valve port A4 is arranged between the fifth and sixth inner valve ports A5 and A6, the second and sixth inner valve ports A2 and A6 are arranged adjacently, and the third and fifth inner valve ports A3 and A5 are arranged adjacently. The widths of the first, second, fourth, and fifth inner valve ports A1, A2, A4, and A5 in the circumferential direction are almost equal; The widths of the third and sixth inner valve ports A3 and A6 in the circumferential direction are almost equal, and are smaller than the widths of the first, second, fourth and fifth inner valve ports A1, A2, A4 and A5 in the circumferential direction. In one embodiment, each of the first, second, fourth, and fifth inner valve ports A1, A2, A4, and A5 spans a central angle of about 72 °; Each of the third and sixth inner valve ports A3 and A6 spans a central angle of about 36°.

In the embodiment as shown in the figures, the widths of the first, the second and the third outer valve ports B1~B3 in a circumferential direction are almost independent. The first outer valve port B1 is located between the second outer valve port B2 and the third outer valve port B3. In the radial direction, the first outer valve port B1 is almost aligned with the third inner valve port A3. The second outer valve port B2 is almost aligned with the first inner valve port A1. The third outer valve port B3 is arranged almost aligned with the fifth inner valve port A5. In one embodiment, each of the first, second and third outer valve ports B1~B3 spans a central angle of about 36 °.

Each inner flow channel C1 and C2 is sector-annular, with an inner diameter equal to the inner diameter of each inner valve port A1~A6, and an outer diameter equal to the outer diameter of each inner valve port A1~A6. On a projection along an axial direction, each inner flow channel C1 and C2 and each inner valve port A1~A6 are located on a same circle. The widths of the first and second inner flow channels C1 and C2 in the circumferential direction is equal and are greater than the width of each inner valve port A1~A6. Therefore, each inner flow channel C1 and C2 can be aligned with and then in fluid communication with at least two adjacent inner valve ports A1~A6 at the same time. In one embodiment, each of the first and second inner flow channels C1 and C2 spans a central angle of about 108 °. Then, the width in the circumferential direction of each of the first and second inner flow channels C1 and C2 are about 1.5 times that of the first, second, fourth and fifth inner valve ports A1, A2, A4 and A5, and about 3 times that of the third and sixth inner valve ports A3 and A6.

Each outer flow channel D1~D3 is sector-annular, with an inner diameter equal to the inner diameter of each outer valve port B1~B3, and an outer diameter equivalent to the outer diameter of each outer valve port B1~B3. On a projection along an axial direction, each outer flow channel D1~D3 and each outer valve port B1~B3 are located on a same circle. The widths of the first, second and third outer flow channels D1~D3 in a circumferential direction are equal and are greater than the width of each external valve port B1~B3 in the circumferential direction. Therefore, each outer flow channel D1~D3 can be aligned with and then in fluid communication with at least two adjacent outer valve ports B1~B3 at the same time. In one embodiment, each of the first, second and third outer flow channels D1~D3 spans a central angle of about 72 °. Then, the circumferential width in a circumferential direction of each of the first, second and third outer flow channels D1~D3 is about 2 times that of each external valve port B1~B3.

It can be understood that since the inner valve port A1~A6 and the outer valve port B1~B3 are sector-annular, and each of the inner flow channel C1, C2 and the outer flow channel D1~D3 are sector-annular, so the above-mentioned an equality of widths in circumferential direction means that an equality of corresponding central angle, and the multiple of the widths are also the multiple of the corresponding central angle.

The valve 10 can be switched among different work states by rotation of the valve core 14 relative to the valve house 12. For example, the valve core 14 can be rotated to selectively enable the first inner valve port A1 to be interconnected with the adjacent second inner valve port A2 through the first internal flow channel C1, or to be interconnected the adjacent third inner valve port A3, or to be interconnected to both of the second inner valve port A2 and the third inner valve port A3 at the same time. It should be understood that the valve core 14 can rotate in the range of 360 degrees relative to the valve house 12, and the following is only explained in several commonly used states of the valve 10.

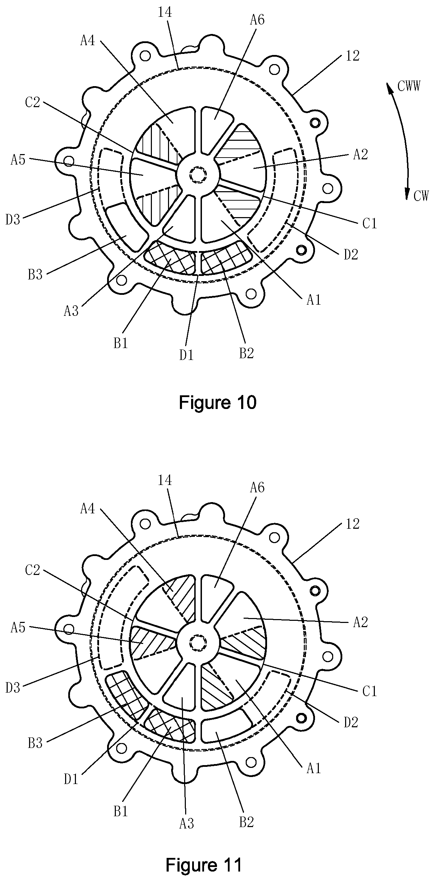

Refer to figure 10, when the valve core 14 is rotated to a first position relative to the valve house 12, the valve 10 is in a first work state. The first inner flow channel C1 is aligned and in communication with both of the first and second inner valve ports A1 and A2; The second inner flow channel C2 is aligned and in communication with both of the fourth and fifth inner valve ports A4 and A5; The first outer flow channel D1 is aligned and in communication with both of the first and second outer valve ports B1 and B2. In one embodiment, the first position can be deemed as the initial position of the valve 10, and the first work state is the initial state of the valve 10. In order to facilitate the comparison of the positions of the valve house 12 and the valve core 14, in Figure 10-16, solid lines represent the valve house 12, and the dashed lines represent the valve core 14.

Refer to figure 11, when the valve core 14 is rotated at a certain angle (e.g. 36° along the CW direction in the figure) from the initial position with respect to the valve house 12 to a second position, the valve core 14 is in a second work state. The first inner flow channel C1 is aligned and in communication with both of the first and second inner valve ports A1 and A2; The second inner flow channel C2 is aligned and in communication with both of the fourth and fifth inner valve ports A4 and A5; The first outer flow channel D1 is aligned and in communication with both of the first and third outer valve ports B1 and B3. That is, in the second work state, the connection among the outer valve port B1~B3 are changed as compared to that in the first work state.

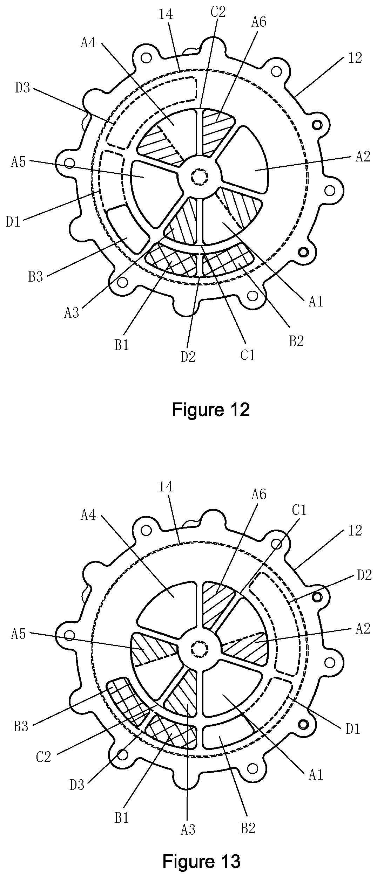

Refer to figure 12, when the valve core 14 is rotated at 72 degrees from the initial position along the CW direction in the figure with respect to the valve house 12 to a third position, the valve 10 is in the third work state. The first inner flow channel C1 is aligned and in communication with both of the first and third inner valve ports A1 and A3; The second inner flow channel C2 is aligned and in communication with both of the fourth and sixth inner valve ports A4 and A6; The second outer flow channel D2 is aligned and in communication with both of the first and second outer valve ports B1 and B2. That is, in the third work state, the connection situation among inner valve port A1~A6 and outer valve port B1~B3 are all changed as compared to that in the first work state.

Refer to figure 13, when the valve core 14 is rotated at 36 degrees from the initial position along the CCW direction in the figure with respect to the valve house 12 to a fourth position, the valve 10 is in a fourth work state. The first inner flow channel C1 is aligned and in communication with both of the second and sixth inner valve ports A2 and A6; The second inner flow channel C2 is aligned and in communication with both of the third and fifth inner valve ports A3 and A5; The third outer flow channel D3 is aligned and in communication with both of the first and third outer valve ports B1 and B3. That is, in the fourth work state, the conduction situation of inner valve port A1~A6 and outer valve port B1~B3 changes again. In some embodiments, when the valve 10 is in the fourth work state, the thermal management system 100 is in a non-functional state.

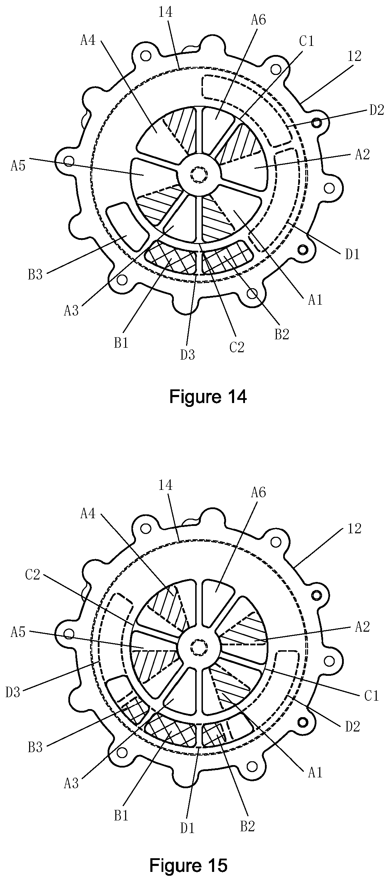

Refer to figure 14, when the valve core 14 is rotated at 72 degrees from the initial position along the CCW direction in the figure with respect to the valve house 12 to a fifth position, the valve 10 is in a fifth work state. The first inner flow channel C1 is aligned and in communication with both of the second and fourth inner valve ports A2 and A4. The second inner flow channel C2 is aligned and in communication with both of the first and fifth inner valve ports A1 and A5; The third outer flow channel D3 is aligned and in communication with both of the first and second outer valve ports B1 and B2. In the fifth work state, the connection situation of inner valve port A1~A6 and outer valve port B1~B3 are further changed.

When the valve 10 is in the aforementioned work states, the corresponding valve ports are connected one to one. It should be understood that the valve core 14 can also be rotated to any position between every two of the first position, the second position, the third position, the fourth position, the fifth position.

Refer to figure 15, when the valve core 14 is rotated at a certain angle (such as rotating 18 ° along the CW direction in the figure from the first position) relative to the valve house 12 to a sixth position between the first position and the second position, the valve 10 is in the sixth work state. The first inner flow channel C1 is aligned and in communication with both of the first and second inner valve ports A1 and A2; The second inner flow channel C2 is aligned and in communication with both of the fourth and fifth inner valve ports A4 and A5; The first outer flow channel D1 is aligned and in communication with the first, second and third outer valve ports B1, B2 and B3 simultaneously. In the sixth work state, the connection among the inner valve ports A1~A6 are one-to-one, and the connection among the outer valve port B1~B3 are one-to-many.

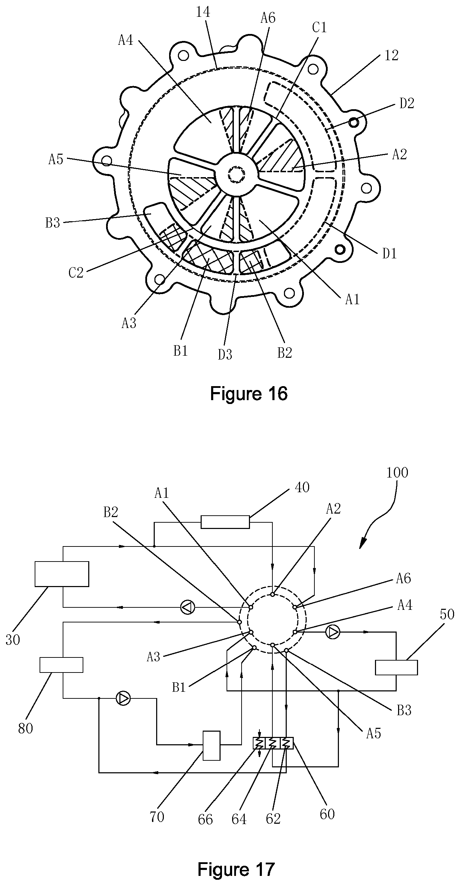

Refer to figure 16, when the valve core 14 rotates at a certain angle (such as rotating 54 ° along the CCW direction in the figure from the first position) relative to the valve house 12 to a seventh position between the fourth position and the fifth position, the valve 10 is in a seventh work state. The fourth inner valve port A4 is connected to both of the second and sixth inner valve ports A2 and A6 simultaneously via the first inner flow channel C1; The first inner valve port A1 is connected to both of the third and fifth inner valve ports A3 and A5 simultaneously via the second inner flow channel C2; The third outer flow channel D3 is aligned and in communication with all of the first, second and third outer valve ports B1, B2 and B3. In the seventh work state, the connection among the inner valve ports A1~A6 is one-to-many conduction, and the connection among the outer valve port B1~B3 are one-to-many.

Please refer to figure 17, the valve 10 provided in this application can be applied to a thermal management system 100 with a plurality of fluid circuits, for a control of the flow of the heat exchange medium in each of the circuits.

In one embodiment, the thermal management system 100 is used in an electric vehicle, and includes a first fluid circuit, a second fluid circuit, a third fluid circuit, wherein the first fluid circuit can be an electric drive cooling circuit, the second fluid circuit can be a battery heat-exchange circuit, and the third circuit can be a passenger cabinet temperature-adjustment circuit. The electric drive cooling circuit includes a first pump, a traction motor 30, a radiator 40 that are connected in series through pipelines; The battery heat-exchange circuit includes a second pump, a battery 50, a chiller 60 that are connected in series through pipelines; The passenger cabinet temperature-adjustment circuit includes a third pump, a heater 70, a blower warming core 80 that are connected in series through pipelines. The heater 70 is preferably a PTC heater. It should be understood that each circuit may be equipped with sensors, check valves, etc., which are not shown in the drawings for the sake of simplification.

In the electric drive cooling circuit, an inlet of the traction motor 30 is defined as a first inlet of the first fluid circuit and is connected to the first inner valve port A1 of the valve 10 through the first pump. An outlet of radiator 40 is defined as a first outlet of the first fluid circuit and is connected to the second inner valve port A2 of valve 10; A first tee joint is arranged between an outlet of traction motor 30 and an inlet of radiator 40. The first tee joint has an input port and two output ports. The input port is connected to the outlet of traction motor 30. One of the output ports is connected to the inlet of radiator 40. The other one output port is connected to the sixth inner valve port A6 of valve 10. Therefore, a first heat exchange medium loop passing through the traction motor 30 and the radiator 40 is formed via the first and second inner valve ports A1 and A2; A second heat exchange medium loop passing through the traction motor 30 is formed via the first and sixth inner valve ports A1 and A6.

In the battery heat-exchange circuit, an inlet of the battery 50 is defined as a second inlet of the second fluid circuit and is connected to the fourth inner valve port A4 of the valve 10 through the second pump; An outlet of chiller 60 is defined as a second outlet of the second fluid circuit is connected to the fifth inner valve port A5 of valve 10; A second tee joint is arranged between an outlet of battery 50 and an inlet of chiller 60. The second tee joint has an input port and two output ports. The input port is connected to the outlet of battery 50. One of the output ports is connected to the inlet of chiller 60. The other one output port is connected to the third inner valve port A3 of valve 10. Therefore, a third heat exchange medium loop passing through the battery 50 and the chiller 60 is formed via the fourth and fifth inner valve ports A4 and A5; A fourth heat exchange medium loop passing the battery 50 is formed via the fourth and third inner valve ports A4 and A3.

In the passenger cabinet temperature-adjustment circuit, an inlet of the blower warming core 80 is defined as a third inlet of the third circuit and is connected to the second outer valve port B2 of the valve 10, An outlet of heater 70 is defined as a third outlet of the third circuit and is connected to the first outer valve port B1 of the valve 10; A third tee joint is arranged between an outlet of the blower warming core 80 and an inlet of the heater 70. The third tee joint has two input ports and an output port. One of the input ports is connected to the outlet of the blower warming core 80; The other one input port is connected to the third outer valve port B3 of the valve 10 through chiller 60. The output port is connected to the inlet of the heater 70. Therefore, a fifth heat exchange medium loop passing the blower warming core 80 and the heater 70 is formed via the first outer valve ports B2 and B1; A sixth heat exchange medium loop passing the heater 70 and the chiller 60 is formed through the third and first outer valve ports B3 and B1.

Preferably, the chiller 60 includes a first fluid path 62, a second fluid path 64 and a third fluid path 66. The first fluid path 62 and the second fluid path 64 are configured for flow of the heat exchange medium. The first fluid path 62 is connected between the third outer valve port B3 and one of the input ports of the third tee joint. The second fluid path 64 is connected in series between one of the output ports of the second tee joint and the fifth inner valve port A5; The third fluid path 66 is provided for flow of the refrigerant, which is connected with the refrigerant pipeline of an air-conditioning compressor.

In one work state where the third heat exchange medium loop and the sixth heat exchange medium loop are enabled simultaneously, the heat exchange medium in the sixth heat exchange medium loop absorbs the heat generated by the heater 70 and releases heat in the first fluid path 62 of the chiller 60; The heat exchange medium in the third heat exchange medium loop absorbs heat in the second fluid path 64 of the chiller 60, and then the heat is transferred to the battery 50. In other words, the battery 50 is heated by the heater 70 to help the vehicle to state at low environmental temperature.

**In** one work state where the third heat exchange medium loop is enabled but the sixth heat exchange medium loop are disabled, the heat exchange medium in the third heat exchange medium loop absorbs the heat generated by the battery 50 and releases heat in the second fluid path 64 of the chiller 60. The refrigerant in the third fluid path 66 system absorbs the heat, thereby helping to cool the battery 50. Therefore, the battery 50 can be prevented from over-heat for safety.

In some embodiments, the chiller 60 may be made up of two heat exchanging units, and one of the heat exchanging units is provided with the first channel 62 and the second channel 64 for heating the battery 50; The other one of the heat exchanging units is provided with the second channel 64 and the third channel 66 for cooling the battery 50.

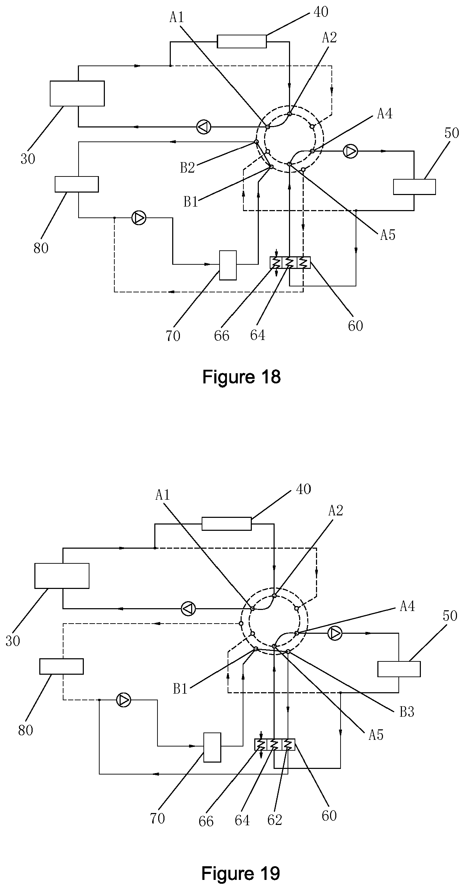

Referring to figure 18, when the thermal management system 100 is in a first work mode with the valve 10 switched to the first work state, the first heat exchange medium loop is enabled, but the second heat exchange medium loop is disabled. The heat generated by the traction motor 30 is transferred to the radiator 40 to be dissipated there through flow of heat exchange medium, therefore the traction motor 30 is cooled. At the same time, the third heat exchange medium loop is enabled, but the fourth heat exchange medium loop is disabled. The heat generated by the battery 50 is taken away by the flow of heat exchange medium and is released to the refrigerant in the chiller 60, therefore, the battery 50 is cooled; At the same time, the fifth heat exchange medium loop is enabled, but the sixth heat exchange medium loop is disabled. The heat generated by the heater 70 is transferred to the blower warming core 80 through the flow of heat exchange medium, and then the passenger cabinet is warmed. In Figure 18-23, a solid line indicates the enabled heat exchange medium loop and a dotted line indicates a disabled heat exchange medium loop.

Referring to figure 19, when the thermal management system 100 is in the second work mode with the valve 10 switched to the second work state, the first heat exchange medium loop is enabled, but the second heat exchange medium loop is disabled. The heat generated by the traction motor 30 is transferred to the radiator 40 to be dissipated with flow of heat exchange medium, therefore the traction motor 30 is cooled; At the same time, the third heat exchange medium loop and the sixth heat exchange medium loop are enabled, but the fourth heat exchange medium loop and the fifth heat exchange medium loop are disabled. The heat of heater 70 is taken away by the flow of heat exchange medium which has heat exchanging with the heat exchange medium in the third heat exchange medium loop when flowing through the chiller 60. Therefore, the battery 50 is heated rapidly. In the second work mode, the passenger cabinet is not be warmed.

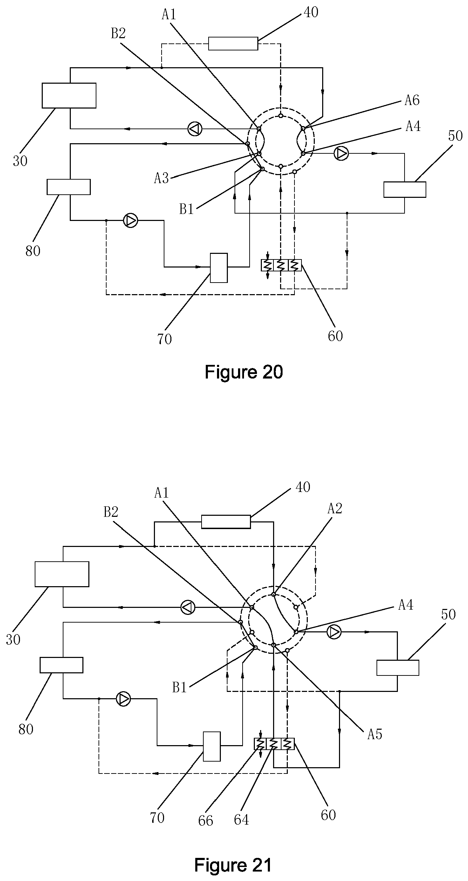

Referring to figure 20, when the thermal management system 100 is in a third work mode with the valve 10 switched to the third work state, the first heat exchange medium loop and the third heat exchange medium loop are disabled, and the second heat exchange medium loop, the fourth heat exchange medium loop are connected in series and enabled. the heat generated by the traction motor 30 is utilized to heat battery 50, which help to make full use of energy; At the same time, the fifth heat exchange medium loop is enabled, but the sixth heat exchange medium loop is disabled. The heat generated by the heater 70 is utilized to warn the passenger cabinet.

As shown in figure 21, when the thermal management system 100 is in a fourth work mode with the valve 10 switched to the fifth work state, the first heat exchange medium loop, the third heat exchange medium loop are connected in series and enabled, the second heat exchange medium loop and the fourth heat exchange medium loop are disabled. The battery 50 and the traction motor 30 are cooled by the chiller 60, within which heat exchanging between the heat exchange medium and the refrigerant occurs. At the same time, the fifth heat exchange medium loop is enabled, but the sixth heat exchange medium loop is disabled. The heat generated by the heater 70 is utilized to warn the passenger cabinet.

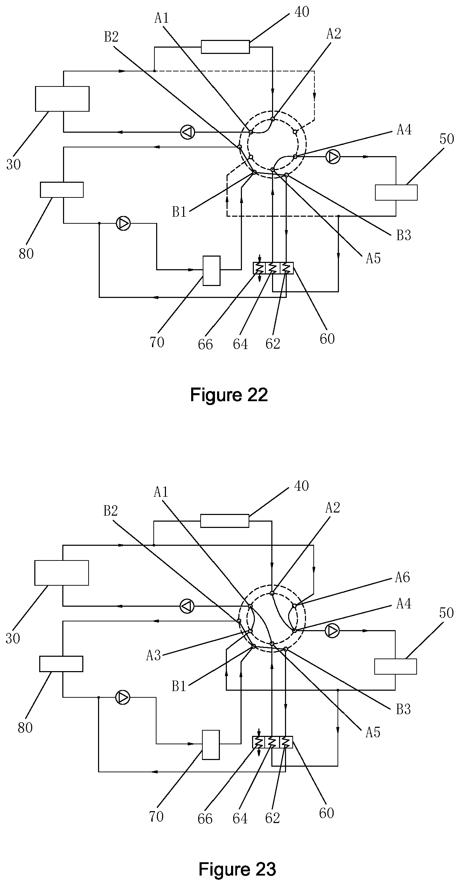

Referring to figure 22, when the thermal management system 100 is in a fifth work mode with the valve 10 switched to the sixth work state, the first heat exchange medium loop is enabled, but the second heat exchange medium loop is disabled. The heat generated by the traction motor 30 is transferred to the radiator 40 to be dissipated there through flow of heat exchange medium, therefore the traction motor 30 is cooled. At the same time, the third heat exchange medium loop, the fifth heat exchange medium loop and the sixth heat exchange medium loop are enabled, but the fourth heat exchange medium loop is disabled. Part of the heat generated by heater 70 is utilized to heat battery 50 through the heat exchange within the chiller 60, and other part of heat is utilized to warm the passenger cabinet through the blower warming core 80.

When the thermal management system 100 is in a fifth work mode, according to changes in demand, the position of the vale core 14 can be adjusted between the first position and the second position of the valve core 14 to change a ratio of the overlapping area between the first outer valve port B1 and the second outer valve port B2 to that between the first outer valve port B1 and the third outer valve port B3. As a result, the flow ratio of the heat exchange medium via the second outer valve port B2 and the third outer valve port B3 is adjustable, and a ratio of heat supply to the battery 50 and the passenger compartment is adjustable. For example, when it is required to increase the heat supply of the passenger cabinet, the valve core 14 is rotated to increase the overlapping area of the first outer valve port B1 and the second outer valve port B2 ; On the contrary, when more heat should be supplied to the battery 50, the valve core 14 is rotated to reduce the overlapping area of the first outer valve port B1 and the second outer valve port B2, but increase the overlapping area of the first outer valve port B1 and the third outer valve port B3 accordingly.

Referring to figure 23, when the thermal management system 100 is in a sixth working state with the valve 10 switched to the seventh work state, the first heat exchange medium loop, the second heat exchange medium loop, the third heat exchange medium loop, the fourth heat exchange medium loop the fifth heat exchange medium loop and the sixth heat exchange medium loop are all enabled. The first heat exchange medium loop and the second heat exchange medium loop are respectively connected in series with the third heat exchange medium loop and the fourth heat exchange medium loop. In this work mode, it is convenient for heat exchange medium filling, and inspection and maintenance of the thermal management system 100.

The thermal management system 100 provided in the present application is equipped with the valve 10 with a plurality of inner valve ports A1~A6 and a plurality of external valve ports B1~B3. The connections among the inner valve ports A1~A6 through the inner flow channels C1 and C2 are switchable. At the same time, the connections among the outer valve ports B1~B3 through the outer flow channels D1~D3 are switchable. The inner flow channels C1, C2 and the outer flow channels D1~D3 are not in fluid communicating with one another within the valve core 14. Each of the inner valve ports A1~A6 cannot be connected to any of the outer valve ports B1~B3. So that, the valve 10 are configured to be connected with a plurality of fluid circuits of thermal management system 100 and enable a variety of working modes of the thermal management system 100. That is, an on-off status and flow rate of heat exchange medium through each of the fluid circuits is adjustable to meet the heat exchange demand under various work conditions. For example, it can be applied to an electric vehicle to meet cooling demand of traction motor 30, heating or cooling demand of battery 50, heating or cooling demand of passenger cabinet etc, and then bring improvement in both of comfort for riding, and safety for the electric vehicle.

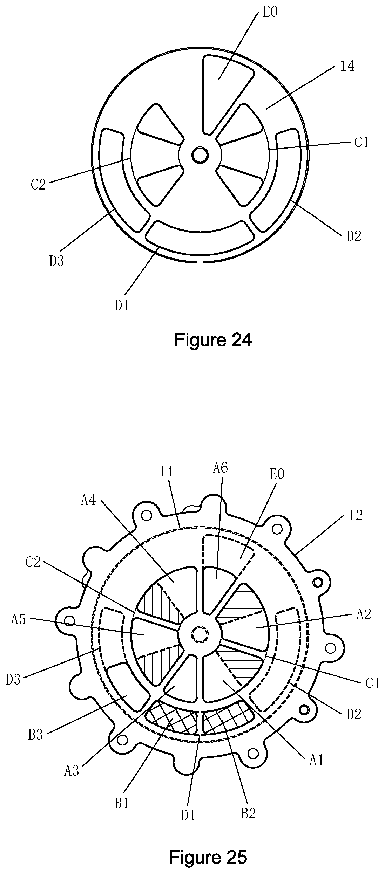

Figures 24-27 show a valve core 14 of the valve 10 according to another embodiment of the present application. The valve core 14 includes inner flow channels C1, C2, outer flow channels D1~D3 and a shared flow channel E0. The shared flow channel E0 is also sector-annular, with a diameter equal to the inner diameter of the inner flow channel C1 and C2, and an outer diameter equal to that of the outer flow channel D1~D3. The shared flow channel E0 extends radially through both of the circles on which the inner flow channel C1, C2 are located and the outer flow channel D1~D3 are located and can enable an interconnection between selected one of the inner valve ports A1 ~ A6 and one of the outer valve ports B1~B3 of the valve house 12. In the illustrated embodiment, the shared flow channel E0 is arranged between the first and second inner flow channels C1 and C2.

Referring to figure 25, the valve 10 is in one of the work states of the valve 10 similar to that of the first embodiment, the first inner flow channel C1 is aligned and in communication with both of the first and second inner valve ports A1 and A2; The second inner flow channel C2 is aligned and in communication with both of the fourth and fifth inner valve ports A4 and A5; The first outer flow channel D1 is aligned and in communication with both of the first and second outer valve ports B1 and B2. The radial inner part of the shared flow channel E0 is aligned and in communication with the sixth inner valve port A6 and the radial outer part is misaligned with any of the outer valve ports B1~B3. In other words, the general flow channel E0 does not interconnect different valve ports.

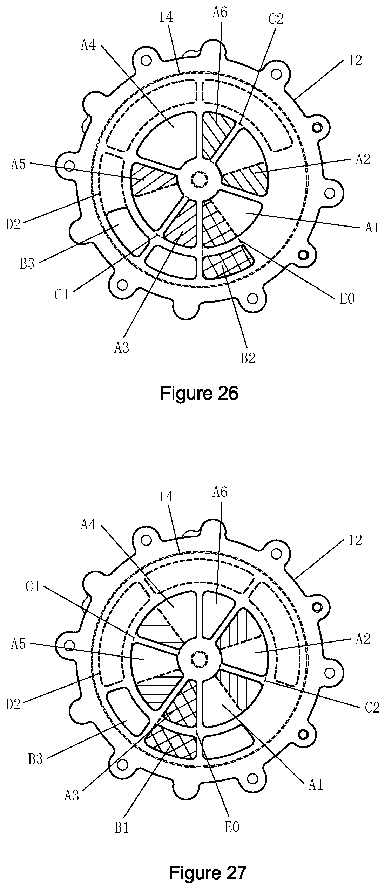

Referring to figure 26, the valve 10 is in another one of the work states of the valve 10. The first inner flow channel C1 is aligned and in communication with both of the third and firth inner valve ports A3 and A5; The second inner flow channel C2 is aligned and in communication with both of the sixth and second inner valve ports A6 andA2; The shared flow channel E0 is aligned and in communication with the first inner valve port A1 and the second outer valve port B2. Referring to figure. 27, the valve 10 is in further another one of the work states. The first inner flow channel C1 is aligned and in communication with both of the fourth and fifth inner valve ports A4 and A5; The second inner flow channel C2 is aligned and in communication with the first and second inner valve ports A1 and A2. The shared flow channel E0 is aligned and in communication with the third inner valve port A3 and the first outer valve port B1. It should be understood that the valve 10 of the present embodiment can be switched among different work states to enable different interconnection among the inner valve ports A1~A6 and/or external valve ports B1~B3. Therefore, the thermal management system 100 has a variety of different working modes, which are not listed herein.

Although certain inventive embodiments of the present disclosure have been specifically described, the present disclosure is not to be construed as being limited thereto. Various changes or modifications may be made to the present disclosure without departing from the appended claims.

## Claims

1. A valve (10) comprising a valve house (12) and a valve core (14) rotatably mounted in the valve house (12), wherein
the valve house (12) is hollow cylindrical as a whole, and comprises a base plate (121), an annular side wall (123) that extends vertically from an outer edge of the base plate (121) and a cover plate (125) covered on the annular side wall (123);
a plurality of inner valve ports (A1~A6) and a plurality of outer valve ports (B 1~B3) are defined in the base plate (121) of the valve house (12); the inner valve ports (A1~A6) and the outer valve ports (B1~B3) are arranged at intervals along the circumference of valve house (12), that is located at one axial side end of the valve house (12); the inner valve ports (A1~A6) are located on a radial inner side of the outer valve ports (B1~B3);
wherein the valve core (14) defines a plurality of inner flow channels (C1,C2) and a plurality of outer flow channels (D1,D2, D3) extending through one of two axial ends of the valve core (14) facing the base plate (121) of the valve house (12); the inner flow channels (C1,C2) are located at a radial inner side of the outer flow channels (D1,D2, D3), and are not in communication with each other inside the valve core (14),
each of the outer flow channels (D1,D2, D3) is configured to align and communicate with two of the outer valve ports (B1~B3) in the axial direction to enable the two outer valve ports (B1~B3) to be interconnected with each other,
wherein in response to the valve core (14) rotating to different positions relative to the valve house (12), the inner flow channels (C1,C2) selectively communicate with different inner valve ports (A1~A6), and the outer flow channels selectively communicate with different outer valve ports (B1~B3);
**characterised in that** each of the inner flow channels (C1,C2) is configured to align and communicate with two of the inner valve ports (A1~A6) in an axial direction to enable the two inner valve ports (A1~A6) to be interconnected with each other, wherein each inner flow channel (C1, C2) is sector-annular, with an inner diameter equal to the inner diameter of each inner valve port (A1~A6), and an outer diameter equal to the outer diameter of each inner valve port (A1~A6), wherein on a projection along an axial direction, each inner flow channel (C1, C2) and each inner valve port (A1~A6) are located on a same circle, wherein the widths of the inner flow channels (C1,C2) in the circumferential direction are equal and are greater than the width of each of the inner valve ports (A1~A6) to enable each of the inner flow channels (C1,C2) to be aligned with and then in fluid communication with at least two adjacent inner valve ports (A1~A6) at the same time;
plurality of outer flow channels comprises a first outer flow channel (D1), a second outer flow channel (D2), and a third outer flow channel (D3), wherein each outer flow channel (D1~D3) is sector-annular, with an inner diameter equal to the inner diameter of each outer valve port (B1~B3), and an outer diameter equivalent to the outer diameter of each outer valve port (B1~B3), wherein on a projection along an axial direction, each outer flow channel (D1~D3) and each outer valve port (B1~B3) are located on a same circle, wherein the widths of the first, second and third outer flow channels (D1~D3) in a circumferential direction are equal and are greater than the width of each of the outer valve ports (B1~B3) in the circumferential direction to enable each of the outer flow channels (D1,D2,D3) to be aligned with and then in fluid communication with at least two adjacent outer valve ports (B1~B3) at the same time.

2. The valve of claim 1, wherein each of the inner valve ports (A1~A6) outer valve port is sector-annular, and each of the inner flow channels (C1,C2) and outer flow channels (D1,D2, D3) is sector-annular; all of the inner valve ports (A1~A6) are arranged on a circle, and all of the outer valve ports (B1~B3) are arranged on a circle; all of the inner flow channels (C1,C2) are arranged on a circle which overlaps axially with the circle where the inner valve ports (A1~A6) are located, and all of the outer flow channels (D1,D2, D3) are arranged on a circle, which overlaps axially with the circle where the outer valve ports (B1~B3) are located.

3. The valve of claim 2, wherein a circumferential width of each of the outer flow channels (D1,D2, D3) is 2 times that of each of the outer valve ports (B1~B3); a circumferential width of each of the inner flow channels (C1,C2) is 3 times that of each of the outer valve ports (B1~B3); a circumferential width of one of the inner valve ports (A1~A6) is equivalent to that of the outer valve ports (B1~B3), and a width of another one of the inner valve ports (A1~A6) is 2 times that of the outer valve ports (B1~B3).

4. The valve of claim 2, wherein the valve core (14) further comprises a shared flow channel (E0), and the shared flow channel (E0) extends radially through both of the circles on which the inner flow channel (C1/C2) and the outer flow channel (D1/D2/D3) are respectively located and is configured to enable a fluid communication between selected one of the inner valve ports (A1~A6) and one of the outer valve ports (B1~B3).

5. The valve of claim 2, wherein the valve core (14) defines a first air hole and a second air hole, the first air hole (143) is located on the circle where the inner flow channels (C1, C2) are located and communicates with one of the inner flow channels (C1,C2), and the second air hole (145) is located on the circle where the outer flow channel are located and communicates with one of the outer flow channels (D1,D2, D3).

6. The valve of any one of claims 1-5, wherein a dynamic friction ring (15) is mounted to an axial end of the valve core (14), a static friction ring (13) is installed inside the valve house (12), the dynamic friction ring (15) and the static friction ring (13) axially abuts against each other to form a dynamic seal therebetween.

7. A thermal management system (100), comprising a first fluid circuit, a second fluid circuit, a third circuit and the valve (10) of any one of claims 1-6, wherein the first fluid circuit is connected to at least two of inner valve ports (A1~A6) of the valve; the second fluid circuit is connected to at least two of the inner valve ports (A1~A6) of valve, but different from the inner ports connected to the first fluid circuit; the third circuit is connected to at least two of the outer valve ports (B1~B3) of the valve.

8. The thermal management system (100) of claim 7, wherein,
a traction motor (30) and a radiator (40) are connected in series in the first fluid circuit, an inlet of the traction motor (30) is defined as a first inlet of the first fluid circuit, an outlet of the radiator (40) is defined as a first outlet of the first fluid circuit; the first inlet and the first outlet of the first fluid circuit are respectively connected to two of the inner valve ports (A1~A6) of the valve (10);
a battery (50) and a chiller (60) are connected in series in the second fluid circuit, an inlet of the battery (50) is defined as a second inlet of the second fluid circuit, an outlet of the chiller (60) is defined as a second outlet of the second fluid circuit; the second inlet and the second outlet of the second fluid circuit are respectively connected to two of the inner valve ports (A1~A6), but different from the inner valve ports (A1~A6) connected to the first fluid circuit;
a heater (70) and a blower warming core (80) are connected in series in the third fluid circuit, an inlet of the heater (70) is defined as a third inlet of the third circuit, an outlet of blower warming core (80) is defined as a third outlet of the third circuit; the third inlet and the third outlet of the third circuit are respectively connected to two of the outer valve ports (B1~B3) of the valve (10).

9. The thermal management system (100) of claim 8, wherein,
a first tee joint is arranged between an outlet of the traction motor (30) and an inlet of the radiator (40), input and outport ports of the first tee joint is connected to three of the inner valve ports (A1, A2, A6) of valve (10) respectively;
a second tee joint is arranged between an outlet of the battery (50) and an inlet of the chiller (60), input and out port output ports of the second tee joint are connected to other three inner valve ports (A3, A4, A5) of the valve (10) respectively;
a third tee joint is arranged between the outlet of the heater (70) and the inlet of the blower warming core (80), input and output ports of the third tee joint are respectively connected two the three outer valve ports (B1~B3) of the valve (10).

10. The thermal management system (100) of claim 9, wherein the chiller is provided with a first fluid path (62), a second fluid path (64) and a third fluid path (66); the first fluid path (62) is connected between the third tee joint and the corresponding outer valve port (B3) of the valve; the second fluid path (64) is connected between the second tee joint and the corresponding one of the inner valve ports (A4); the third fluid path (66) is provided for flow of refrigerant.

11. The thermal management system (100) of claim 10, wherein the chiller (60) is made up of two heat exchanging units, one of which is provided with the first fluid path (62) and the second fluid path (64), and the other one is provided with the second fluid path (64) and the third fluid path (66).

12. The thermal management system (100) of claim 9, wherein,
the plurality of inner valve ports (A1~A6) comprises a first inner valve port (A1), a second inner valve port (A2), a third inner valve port (A3), a fourth inner valve port (A4), a fifth inner valve port (A5) and a sixth inner valve port (A6), the first inner valve port (A1) is located between the second inner valve port (A2) and the third inner valve port (A3) in a circumferential direction, and the fourth inner valve port (A4) is located between the fifth inner valve port (A5) and the sixth inner valve port (A6) in a circumferential direction;
the plurality of outer valve ports (B1~B3) comprises a first outer valve port (B1), a second outer valve port (B2) and a third outer valve port (B3), and the first outer valve port (B1) is located between the second outer valve port (B2) and the third outer valve port (B3) in a circumferential direction;
the first inlet, the first outlet of the first fluid circuit and the first tee joint are directly connected to the first inner valve port (A1), the second inner valve port (A2) and the sixth inner valve port (A6), respectively;
the second inlet, the second outlet of the second fluid circuit and the second tee joint are directly connected to the fourth inner valve port (A4), the fifth inner valve port (A5) and the third inner valve port (A3), respectively;
the third inlet and the third outlet of the third fluid circuit are respectively connected to the second outer valve port (B2) and the first outer valve port (B1), and the third tee joint is connected to the third outer valve port (B3) through the chiller (60).

13. The thermal management system (100) of claim 12, wherein the thermal management system (100) is configured to be switched among at least the following:
a first work mode, wherein the first inner valve port (A1) of the valve is in fluid communication with the second inner valve port (A2), and the fourth inner valve port is in communication with the fifth inner valve port (A5), and the first outer valve port (B 1) is in communication with the second outer valve port (B2);
a second work mode, wherein the first inner valve port (A1) of the valve is in fluid communication with the second inner valve port (A2), and the fourth inner valve port is in fluid communication with the fifth inner valve port (A5), and the first outer valve port (B 1) is in fluid communication with the third outer valve port (B3);
a third working state, wherein the first inner valve port (A1) of the valve is in fluid communication with the third inner valve port (A3), and the fourth inner valve port is in fluid communication with the sixth inner valve port (A6), and the first outer valve port (B 1) is in fluid communication with the second outer valve port (B2);
a fourth work mode, wherein the first inner valve port (A1) of the valve is in fluid communication with the fifth inner valve port (A5), the fourth inner valve port is in fluid communication with the second inner valve port (A2), and the first outer valve port (B 1) is in fluid communication with the second outer valve port (B2);
a fifth work mode: wherein the first inner valve port (A1) of the valve is in fluid communication with the second inner valve port (A2), the fourth inner valve port is in fluid communication with the fifth inner valve port (A5), and the first outer valve port (B1) is in fluid communication with both of the second outer valve port (B2) and the third outer valve port (B3) simultaneously;
a sixth work mode, wherein the first inner valve port (A1) is in fluid communication with both of the third inner valve port (A3) and the fifth inner valve port (A5) of the valve simultaneously; the fourth inner valve port is in fluid communication with both of the second inner valve port (A2) and the sixth inner valve port (A6) simultaneously; the first outer valve port (B 1) is in fluid communication with both of the second outer valve port (B2) and the third outer valve port (B3) simultaneously.

14. The thermal management system (100) of claim 13, wherein a flow ratio via the second outer valve port (B2) and the third outer valve port (B3) are adjustable in response to the first outer valve port (B 1) is in fluid communication with both of the second outer valve port (B2) and the third outer valve port (B3) simultaneously.

## Patentansprüche

1. Ventil (10), das ein Ventilgehäuse (12) und einen Ventileinsatz (14), der drehbar in dem Ventilgehäuse (12) montiert ist, umfasst, wobei
das Ventilgehäuse (12) als ein Ganzes hohlzylindrisch ist und eine Grundplatte (121), eine ringförmige Seitenwand (123), die sich von einem Außenrand der Grundplatte (121) vertikal erstreckt, und eine Abdeckplatte (125), die die ringförmige Seitenwand (123) bedeckt, umfasst;
eine Vielzahl innerer Ventilöffnungen (A1~A6) und eine Vielzahl äußerer Ventilöffnungen (B1~B3) in der Grundplatte (121) des Ventilgehäuses (12) definiert ist; die inneren Ventilöffnungen (A1~A6) und die äußeren Ventilöffnungen (B1~B3) in regelmäßigen Abständen entlang des Umfangs des Ventilgehäuses (12), das sich an einem axialen Seitenende des Ventilgehäuses (12) befindet, eingerichtet sind; sich die inneren Ventilöffnungen (A1~A6) auf einer radialen Innenseite der äußeren Ventilöffnungen (B1~B3) befinden;
wobei der Ventileinsatz (14) eine Vielzahl innerer Strömungskanäle (C1, C2) und eine Vielzahl äußerer Strömungskanäle (D1, D2, D3) definiert, die sich durch eines der beiden axialen Enden des Ventileinsatzes (14) erstrecken, das der Grundplatte (121) des Ventilgehäuses (12) zugewandt ist; sich die inneren Strömungskanäle (C1, C2) an einer radialen inneren Seite der äußeren Strömungskanäle (D1, D2, D3) befinden und innerhalb des Ventileinsatzes (14) nicht miteinander in Kommunikation stehen, wobei jeder der äußeren Strömungskanäle (D1, D2, D3) dazu konfiguriert ist, mit zwei der äußeren Ventilöffnungen (B1~B3) ausgerichtet zu sein und mit diesen in der Axialrichtung in Kommunikation zu stehen, um zu ermöglichen, dass die beiden äußeren Ventilöffnungen (B1~B3) miteinander verbunden sind,
wobei als Reaktion auf das Drehen des Ventileinsatzes (14) in unterschiedliche Positionen in Bezug auf das Ventilgehäuse (12) die inneren Strömungskanäle (C1, C2) selektiv mit unterschiedlichen inneren Ventilöffnungen (A1~A6) in Kommunikation stehen, und die äußeren Strömungskanäle selektiv mit unterschiedlichen äußeren Ventilöffnungen (B1~B3) in Kommunikation stehen;
**dadurch gekennzeichnet, dass** jeder der inneren Strömungskanäle (C1, C2) dazu konfiguriert ist, mit zwei der inneren Ventilöffnungen (A1~A6) in einer Axialrichtung ausgerichtet zu sein, um zu ermöglichen, dass die zwei inneren Ventilöffnungen (A1~A6) miteinander verbunden werden, wobei jeder innere Strömungskanal (C1, C2) sektorringförmig ist, mit einem Innendurchmesser gleich dem Innendurchmesser jeder inneren Ventilöffnung (A1~A6), und einem Außendurchmesser gleich dem Außendurchmesser jeder inneren Ventilöffnung (A1~A6), wobei bei einer Projektion in axialrichtung jeder innere Strömungskanal (C1, C2) und jede innere Ventilöffnung (A1~A6) auf demselben Kreis angeordnet sind, wobei die Breiten der inneren Strömungskanäle (C1, C2) in Umfangsrichtung gleich sind und größer als die Breite jeder der inneren Ventilöffnungen (A1~A6) sind, um zu ermöglichen, dass jeder der inneren Strömungskanäle (C1, C2) gleichzeitig mit mindestens zwei benachbarten inneren Ventilöffnungen (A1~A6) ausgerichtet wird und anschließend in strömungstechnischer Kommunikation mit diesen steht;
die Vielzahl äußerer Strömungskanäle einen ersten äußeren Strömungskanal (D1), einen zweiten äußeren Strömungskanal (D2) und einen dritten äußeren Strömungskanal (D3) umfasst, wobei jeder äußere Strömungskanal (D1-D3) sektorringförmig ist, mit einem Innendurchmesser gleich dem Innendurchmesser jeder äußeren Ventilöffnung (B1~B3), und einem Außendurchmesser gleich dem Außendurchmesser jeder äußeren Ventilöffnung (B1~B3), wobei auf einer Projektion entlang einer axialrichtung jeder äußere Strömungskanal (D1~D3) und jede äußere Ventilöffnung (B1~B3) auf demselben Kreis liegen, wobei die Breiten des ersten, zweiten und dritten äußeren Strömungskanals (D1~D3) in einer Umfangsrichtung gleich und größer sind als die Breite jeder der äußeren Ventilöffnung (B1~B3) in der Umfangsrichtung, um zu ermöglichen, dass jeder der äußeren Strömungskanäle (D1, D2, D3) mit mindestens zwei angrenzenden äußeren Ventilöffnungen (B1~B3) ausgerichtet und dann gleichzeitig in strömungstechnischer Kommunikation mit diesen stehen.

2. Ventil nach Anspruch 1, wobei jede der inneren Ventilöffnungen (A1~A6) der äußeren Ventilöffnung sektorringförmig ist, und jeder der inneren Strömungskanäle (C1, C2) sowie der äußeren Strömungskanäle (D1, D2, D3) sektorringförmig ist; alle inneren Ventilöffnungen (A1~A6) auf einem Kreis eingerichtet sind, und alle äußeren Ventilöffnungen (B1~B3) auf einem Kreis eingerichtet sind; alle inneren Strömungskanäle (C1, C2) auf einem Kreis eingerichtet sind, der axial den Kreis überlappt, auf dem sich die inneren Ventilöffnungen (A1~A6) befinden, und alle äußeren Strömungskanäle (D1, D2, D3) auf einem Kreis eingerichtet sind, der axial den Kreis überlappt, auf dem sich die äußeren Ventilöffnungen (B1~B3) befinden.

3. Ventil nach Anspruch 2, wobei eine Umfangsbreite jedes der äußeren Strömungskanäle (D1, D2, D3) 2 Mal so groß ist wie die jeder der äußeren Ventilöffnungen (B1~B3); eine Umfangsbreite jedes der inneren Strömungskanäle (C1, C2) 3 Mal so groß ist wie die jeder der äußeren Ventilöffnungen (B1~B3); eine Umfangsbreite einer der inneren Ventilöffnungen (A1~A6) gleich der der äußeren Ventilöffnungen (B1~B3) ist, und eine Breite einer anderen der inneren Ventilöffnungen (A1~A6) 2 Mal so groß ist wie die der äußeren Ventilöffnungen (B1~B3).

4. Ventil nach Anspruch 2, wobei der Ventileinsatz (14) weiter einen gemeinsam genutzten Strömungskanal (E0) umfasst und sich der gemeinsam genutzte Strömungskanal (E0) radial durch beide Kreise erstreckt, auf denen sich jeweils der innere Strömungskanal (C1/C2) und der äußere Strömungskanal (D1/D2/D3) befinden und dazu konfiguriert ist, eine Fluidkommunikation zwischen einer ausgewählten der inneren Ventilöffnungen (A1~A6) und einer der äußeren Ventilöffnungen (B1~B3) zu ermöglichen.

5. Ventil nach Anspruch 2, wobei der Ventileinsatz (14) ein erstes und ein zweites Luftloch definiert, sich das erste Luftloch (143) auf dem Kreis befindet, auf dem sich die inneren Strömungskanäle (C1, C2) befinden, und mit einem der inneren Strömungskanäle (C1, C2) in Kommunikation steht, und sich das zweite Luftloch (145) auf dem Kreis befindet, auf dem sich die äußeren Strömungskanäle befinden und mit einem der äußeren Strömungskanäle (D1, D2, D3) in Kommunikation steht.

6. Ventil nach einem der Ansprüche 1-5, wobei ein dynamischer Reibring (15) an ein axiales Ende des Ventileinsatzes (14) montiert ist, ein statischer Reibring (13) im Inneren des Ventilgehäuses (12) installiert ist, und der dynamische Reibring (15) und der statische Reibring (13) axial aneinander anliegen, um eine dynamische Dichtung zwischeneinander zu bilden.

7. Wärmemanagementsystem (100), das einen ersten Fluidkreislauf, einen zweiten Fluidkreislauf, einen dritten Fluidkreislauf und das Ventil (10) nach einem der Ansprüche 1 bis 6 umfasst, wobei der erste Fluidkreislauf mit mindestens zwei von inneren Ventilöffnungen (A1~A6) des Ventils verbunden ist; der zweite Fluidkreislauf mit mindestens zwei der inneren Ventilöffnungen (A1~A6) des Ventils verbunden ist, aber unterschiedlich von den inneren Öffnungen, die mit dem ersten Fluidkreislauf verbunden sind; der dritte Kreislauf mit mindestens zwei der äußeren Ventilöffnungen (B1~B3) des Ventils verbunden ist.

8. Wärmemanagementsystem (100) nach Anspruch 7, wobei
ein Fahrmotor (30) und ein Kühler (40) in dem ersten Fluidkreislauf in Reihe geschaltet sind, ein Einlass des Fahrmotors (30) als ein erster Einlass des ersten Fluidkreislaufs definiert ist, ein Auslass des Kühlers (40) als ein erster Auslass des ersten Fluidkreislaufs definiert ist; der erste Einlass und der erste Auslass des ersten Fluidkreislaufs jeweils mit zwei der inneren Ventilöffnungen (A1~A6) des Ventils (10) verbunden sind;
eine Batterie (50) und ein Kühlaggregat (60) in dem zweiten Fluidkreislauf in Reihe geschaltet sind, ein Einlass der Batterie (50) als zweiter Einlass des zweiten Fluidkreislaufs definiert ist, ein Auslass des Kühlers (60) als ein zweiter Auslass des zweiten Kühlkreislaufs definiert ist; der zweite Einlass und der zweite Auslass des zweiten Fluidkreislaufs jeweils mit zwei der inneren Ventilöffnungen (A1~A6) verbunden sind, aber unterschiedlich von den inneren Ventilöffnungen (A1~A6), die mit dem ersten Fluidkreislauf verbunden sind;
eine Heizvorrichtung (70) und ein Gebläse-Wärmekern (80) in dem dritten Fluidkreislauf in Reihe geschaltet sind, ein Einlass der Heizvorrichtung (70) als ein dritter Einlass des dritten Kreislaufs definiert ist, der Auslass des Gebläse-Wärmekerns (80) als ein dritter Auslass des dritten Kreislaufs definiert ist; der dritte Einlass und der dritte Auslass des dritten Kreislaufs jeweils mit zwei der äußeren Ventilöffnungen (B1~B3) des Ventils (10) verbunden sind.

9. Wärmemanagementsystem (100) nach Anspruch 8, wobei
zwischen einem Auslass des Fahrmotors (30) und einem Einlass des Kühlers (40) eine erste T-Verbindungsstelle eingerichtet ist; die Eingangs- und die Ausgangsöffnung der ersten T-Verbindungsstelle jeweils mit drei der inneren Ventilöffnungen (A1, A2, A6) des Ventils (10) verbunden sind;
zwischen einem Auslass der Batterie (50) und einem Einlass des Kühlaggregats (60) eine zweite T-Verbindungsstelle eingerichtet ist, die Eingangs- und die Ausgangsöffnung der zweiten T-Verbindungsstelle jeweils mit den drei anderen inneren Ventilöffnungen (A3, A4, A5) des Ventils (10) verbunden sind;
zwischen dem Auslass der Heizvorrichtung (70) und dem Einlass des Gebläse-Heizkerns (80) eine dritte T-Verbindungsstelle eingerichtet ist, die Eingangs- und die Ausgangsöffnung der dritten T-Verbindungsstelle jeweils mit den drei äußeren Ventilöffnungen (B1~B3) des Ventils (10) verbunden sind.

10. Wärmemanagementsystem (100) nach Anspruch 9, wobei das Kühlaggregat mit einem ersten Fluidpfad (62), einem zweiten Fluidpfad (64) und einem dritten Fluidpfad (66) versehen ist; der erste Fluidpfad (62) zwischen der dritten T-Verbindungsstelle und der entsprechenden äußeren Ventilöffnung (B3) des Ventils verbunden ist; der zweite Fluidpfad (64) zwischen der zweiten T-Verbindungsstelle und der entsprechenden einen der inneren Ventilöffnung (A4) verbunden ist; der dritte Fluidpfad (66) für den Kältemittelstrom vorgesehen ist.

11. Wärmemanagementsystem (100) nach Anspruch 10, wobei das Kühlaggregat (60) aus zwei Wärmetauschereinheiten besteht, von denen eine mit dem ersten Fluidpfad (62) und dem zweiten Fluidpfad (64) versehen ist, und die andere mit dem zweiten Fluidpfad (64) und dem dritten Fluidpfad (66) versehen ist.

12. Wärmemanagementsystem (100) nach Anspruch 9, wobei
die Vielzahl innerer Ventilöffnungen (A1~A6) eine erste innere Ventilöffnung (A1), eine zweite innere Ventilöffnung (A2), eine dritte innere Ventilöffnung (A3), eine vierte innere Ventilöffnung (A4), eine fünfte innere Ventilöffnung (A5) und eine sechste innere Ventilöffnung (A6) umfasst, wobei sich die erste innere Ventilöffnung (A1) in einer Umfangsrichtung zwischen der zweiten inneren Ventilöffnung (A2) und der dritten inneren Ventilöffnung (A3) befindet und sich die vierte innere Ventilöffnung (A4) in einer Umfangsrichtung zwischen der fünften inneren Ventilöffnung (A5) und der sechsten inneren Ventilöffnung (A6) befindet;
die Vielzahl äußerer Ventilöffnungen (B1~B3) eine erste äußere Ventilöffnung (B1), eine zweite äußere Ventilöffnung (B2) und eine dritte äußere Ventilöffnung (B3) umfasst, und sich die erste äußere Ventilöffnung (B1) in einer Umfangsrichtung zwischen der zweiten äußeren Ventilöffnung (B2) und der dritten äußeren Ventilöffnung (B3) befindet;
der erste Einlass, der erste Auslass des ersten Fluidkreislaufs und die erste T-Verbindungsstelle jeweils direkt mit der ersten inneren Ventilöffnung (A1), der zweiten inneren Ventilöffnung (A2) und der sechsten inneren Ventilöffnung (A6) verbunden sind;
der zweite Einlass, der zweite Auslass des zweiten Fluidkreislaufs und die erste T-Verbindungsstelle jeweils direkt mit der vierten inneren Ventilöffnung (A4), der fünften inneren Ventilöffnung (A5) bzw. der dritten inneren Ventilöffnung (A3) verbunden sind;
der dritte Einlass und der dritte Auslass des dritten Fluidkreislaufs jeweils mit der zweiten äußeren Ventilöffnung (B2) und der ersten äußeren Ventilöffnung (B1) verbunden sind, und die dritte T-Verbindungsstelle durch das Kühlaggregat (60) mit der dritten äußeren Ventilöffnung (B3) verbunden ist.

13. Wärmemanagementsystem (100) nach Anspruch 12, wobei das Wärmemanagementsystem (100) dazu konfiguriert ist, zwischen mindestens den folgenden umgeschaltet zu werden:
einem ersten Arbeitsmodus, wobei die erste innere Ventilöffnung (A1) des Ventils mit der zweiten inneren Ventilöffnung (A2) in Fluidkommunikation steht, und die vierte innere Ventilöffnung mit der fünften inneren Ventilöffnung (A5) in Kommunikation steht, und die erste äußere Ventilöffnung (B1) in strömungstechnischer Kommunikation mit der zweiten äußeren Ventilöffnung (B2) steht;
einem zweiten Arbeitsmodus, wobei die erste innere Ventilöffnung (A1) des Ventils in Fluidkommunikation mit der zweiten inneren Ventilöffnung (A2) steht, die vierte innere Ventilöffnung in Fluidkommunikation mit der fünften inneren Ventilöffnung (A5) steht und die erste äußere Ventilöffnung (B1) in strömungstechnischer Kommunikation mit der dritten äußeren Ventilöffnung (B3) steht;
einem dritten Arbeitszustand, wobei die erste innere Ventilöffnung (A1) des Ventils in Fluidkommunikation mit der dritten inneren Ventilöffnung (A3) steht, und die vierte innere Ventilöffnung in Fluidkommunikation mit der sechsten inneren Ventilöffnung (A6) steht, und die erste äußere Ventilöffnung (B1) in strömungstechnischer Kommunikation mit der zweiten äußeren Ventilöffnung (B2) steht;
einem vierten Arbeitsmodus, wobei die erste innere Ventilöffnung (A1) des Ventils in Fluidkommunikation mit der fünften inneren Ventilöffnung (A5) steht, die vierte innere Ventilöffnung in Fluidkommunikation mit der zweiten inneren Ventilöffnung (A2) steht, und die erste äußere Ventilöffnung (B1) in strömungstechnischer Kommunikation mit der zweiten äußeren Ventilöffnung (B2) steht;
einem fünften Arbeitsmodus: wobei die erste innere Ventilöffnung (A1) des Ventils in Fluidkommunikation mit der zweiten inneren Ventilöffnung (A2) steht, die vierte innere Ventilöffnung in Fluidkommunikation mit der fünften inneren Ventilöffnung (A5) steht, und die erste äußere Ventilöffnung (B1) gleichzeitig in strömungstechnischer Kommunikation mit sowohl der zweiten äußeren Ventilöffnung (B2) als auch mit der dritten äußeren Ventilöffnung (B3) steht;
einem sechsten Arbeitsmodus, wobei die erste innere Ventilöffnung (A1) gleichzeitig sowohl mit der dritten inneren Ventilöffnung (A3) als auch mit der fünften inneren Ventilöffnung (A5) des Ventils in Fluidkommunikation steht; die vierte innere Ventilöffnung gleichzeitig sowohl mit der zweiten inneren Ventilöffnung (A2) als auch mit der sechsten inneren Ventilöffnung (A6) in Fluidkommunikation steht; die erste äußere Ventilöffnung (B1) gleichzeitig in strömungstechnischer Kommunikation mit sowohl der zweiten äußeren Ventilöffnung (B2) als auch mit der dritten äußeren Ventilöffnung (B3) steht.

14. Wärmemanagementsystem (100) nach Anspruch 13, wobei ein Strömungsverhältnis über die zweite äußere Ventilöffnung (B2) und die dritte äußere Ventilöffnung (B3) als Reaktion darauf, dass die erste äußere Ventilöffnung (B1) sowohl in strömungstechnischer Kommunikation mit der zweiten äußeren Ventilöffnung (B2) als auch mit der dritten äußeren Ventilöffnung (B3) in Fluidkommunikation steht, einstellbar sind.

## Revendications

1. Soupape (10) comprenant un corps de soupape (12) et un noyau de soupape (14) monté de manière rotative dans le corps de soupape (12), dans laquelle
le corps de soupape (12) est cylindrique et creux dans son ensemble et comprend une plaque de base (121), une paroi latérale annulaire (123) qui s'étend verticalement à partir d'un bord extérieur de la plaque de base (121) et une plaque de recouvrement (125) recouvrant la paroi latérale annulaire (123) ;
une pluralité d'orifices internes de soupape (A1~A6) et une pluralité d'orifices externes de soupape (B1~B3) sont définies dans la plaque de base (121) du corps de soupape (12) ; les orifices internes de soupape (A1~A6) et les orifices externes de soupape (B1~B3) sont disposés à intervalles le long de la circonférence du corps de soupape (12), qui est située à l'une des extrémités côté axial du corps de soupape (12) ; les orifices internes de soupape (A1~A6) sont situés sur un côté interne radial des orifices externes de soupape (B1~B3) ;
dans laquelle le noyau de soupape (14) définit une pluralité de canaux d'écoulement internes (C1, C2) et une pluralité de canaux d'écoulement externes (D1, D2, D3) s'étendant à travers l'une des deux extrémités axiales du noyau de soupape (14) faisant face à la plaque de base (121) du corps de soupape (12) ; les canaux d'écoulement internes (C1, C2) sont situés au niveau d'un côté interne radial des canaux d'écoulement externes (D1, D2, D3) et ne communiquent pas entre eux à l'intérieur du noyau de soupape (14), chacun des canaux d'écoulement externes (D1, D2, D3) est configuré pour s'aligner et communiquer avec deux des orifices externes de soupape (B1~B3) dans la direction axiale pour permettre aux deux orifices externes de soupape (B1~B3) d'être interconnectés l'un à l'autre,
dans laquelle en réponse à la rotation du noyau de soupape (14) dans différentes positions par rapport au corps de soupape (12), les canaux d'écoulement internes (C1, C2) communiquent sélectivement avec différents orifices internes de soupape (A1~A6), et les canaux d'écoulement externes communiquent sélectivement avec différents orifices externes de soupape (B1~B3) ;
**caractérisée en ce que** chacun des canaux d'écoulement internes (C1, C2) est configuré pour s'aligner et communiquer avec deux des orifices internes de soupape (A1~A6) dans une direction axiale pour permettre aux deux orifices internes de soupape (A1~A6) d'être interconnectés entre eux, dans laquelle chaque canal d'écoulement interne (C1, C2) est de forme annulaire sectorielle, avec un diamètre intérieur égal au diamètre intérieur de chaque orifice interne de soupape (A1~A6) et un diamètre extérieur égal au diamètre extérieur de chaque orifice interne de soupape (A1~A6), dans laquelle sur une projection selon une direction axiale, chaque canal d'écoulement interne (C1, C2) et chaque orifice interne de soupape (A1~A6) sont situés sur un même cercle, dans laquelle les largeurs des canaux d'écoulement internes (C1, C2) dans la direction circonférentielle sont égales et supérieures à la largeur de chacun des orifices internes de soupape (A1~A6) afin de permettre à chacun des canaux d'écoulement internes (C1, C2) d'être aligné avec au moins deux orifices internes de soupape (A1~A6) adjacents, puis d'être mis en communication fluidique avec ceux-ci en même temps ;
la pluralité de canaux d'écoulement externes comprend un premier canal d'écoulement externe (D1), un deuxième canal d'écoulement externe (D2) et un troisième canal d'écoulement externe (D3), dans laquelle chaque canal d'écoulement externe (D1~D3) est de forme annulaire sectorielle, avec un diamètre intérieur égal au diamètre intérieur de chaque orifice externe de soupape (B1~B3) et un diamètre extérieur équivalent au diamètre extérieur de chaque orifice externe de soupape (B1~B3), dans laquelle sur une projection selon une direction axiale, chaque canal d'écoulement externe (D1~D3) et chaque orifice externe de soupape (B1~B3) sont situés sur un même cercle, dans laquelle les largeurs des premier, deuxième et troisième canaux d'écoulement externes dans une direction circonférentielle sont égales et supérieures à la largeur de chacun des orifices externes de soupape (B1~B3) dans la direction circonférentielle afin de permettre à chacun des canaux d'écoulement externes (D1, D2, D3) d'être aligné avec au moins deux orifices externes de soupape (B1~B3) adjacents et d'être ensuite mis en communication fluidique avec ceux-ci en même temps.

2. Soupape selon la revendication 1, dans laquelle chacun des orifices internes de soupape (A1~A6) est de forme annulaire sectorielle, et chacun des canaux d'écoulement internes (C1, C2) et des canaux d'écoulement externes (D1, D2, D3) est de forme annulaire sectorielle ; tous les orifices internes de soupape (A1~A6) sont disposés sur un cercle, et tous les orifices externes de soupape (B1~B3) sont disposés sur un cercle ; tous les canaux d'écoulement internes (C1, C2) sont disposés sur un cercle qui chevauche axialement le cercle où les orifices internes de soupape (A1~A6) sont situés, et tous les canaux d'écoulement externes (D1, D2, D3) sont disposés sur un cercle qui chevauche axialement le cercle où les orifices externes de soupape (B1~B3) sont situés.

3. Soupape selon la revendication 2, dans laquelle la largeur circonférentielle de chacun des canaux d'écoulement externes (D1, D2, D3) est 2 fois supérieure à celle de chacun des orifices externes de soupape (B1~B3) ; la largeur circonférentielle de chacun des canaux d'écoulement internes (C1, C2) est 3 fois supérieure à celle de chacun des orifices externes de soupape (B1~B3) ; la largeur circonférentielle de l'un des orifices internes de soupape (A1~A6) est équivalente à celle des orifices externes de soupape (B1~B3), et la largeur d'un autre des orifices internes de soupape (A1~A6) est 2 fois supérieure à celle des orifices externes de soupape (B1~B3).

4. Soupape selon la revendication 2, dans laquelle le noyau de soupape (14) comprend en outre un canal d'écoulement commun (E0), et le canal d'écoulement commun (E0) s'étend radialement à travers les deux cercles sur lesquels le canal d'écoulement interne (C1/C2) et le canal d'écoulement externe (D1/D2/D3) sont respectivement situés et est configuré pour permettre une communication fluide entre l'un sélectionné des orifices internes de soupape (A1~A6) et l'un des orifices externes de soupape (B1 ~B3).

5. Soupape selon la revendication 2, dans laquelle le noyau de soupape (14) définit un premier trou d'air et un second trou d'air, le premier trou d'air (143) est situé sur le cercle où les canaux d'écoulement internes (C1, C2) sont situés et communique avec l'un des canaux d'écoulement internes (C1, C2), et le second trou d'air (145) est situé sur le cercle où les canaux d'écoulement externes sont situés et communique avec l'un des canaux d'écoulement externes (D1, D2, D3).

6. Soupape selon l'une quelconque des revendications 1-5, dans laquelle une bague de friction dynamique (15) est montée à une extrémité axiale du noyau de soupape (14), une bague de friction statique (13) est installée à l'intérieur du corps de soupape (12), la bague de friction dynamique (15) et la bague de friction statique (13) butent axialement l'une contre l'autre pour former un joint dynamique entre elles.

7. Système de gestion thermique (100) comprenant un premier circuit de fluide, un deuxième circuit de fluide, un troisième circuit et la soupape (10) selon l'une quelconque des revendications 1-6, dans lequel le premier circuit de fluide est connecté à au moins deux des orifices internes de soupape (A1~A6) de la soupape ; le deuxième circuit de fluide est connecté à au moins deux des orifices internes de soupape (A1~A6) de la soupape, mais différemment des orifices internes connectés au premier circuit de fluide ; le troisième circuit est connecté à au moins deux des orifices externes de soupape (B1~B3) de la soupape.

8. Système de gestion thermique (100) de la revendication 7, dans lequel,
un moteur de traction (30) et un radiateur (40) sont connectés en série dans le premier circuit de fluide, une entrée du moteur de traction (30) est définie comme une première entrée du premier circuit de fluide, une sortie du radiateur (40) est définie comme une première sortie du premier circuit de fluide ; la première entrée et la première sortie du premier circuit de fluide sont respectivement connectées à deux des orifices internes de soupape (A1~A6) de la soupape (10) ;
une batterie (50) et un refroidisseur (60) sont connectés en série dans le deuxième circuit de fluide, une entrée de la batterie (50) est définie comme une deuxième entrée du deuxième circuit de fluide, une sortie du refroidisseur (60) est définie comme une deuxième sortie du deuxième circuit de fluide ; la deuxième entrée et la deuxième sortie du deuxième circuit de fluide sont respectivement connectées à deux des orifices internes de soupape (A1~A6), mais différemment des orifices internes de soupape (A1~A6) connectés au premier circuit de fluide ;
un élément chauffant (70) et un noyau de réchauffage par soufflerie (80) sont connectés en série dans le troisième circuit de fluide, une entrée de l'élément chauffant (70) est définie comme une troisième entrée du troisième circuit, une sortie du noyau de réchauffage par soufflerie (80) est définie comme une troisième sortie du troisième circuit ; la troisième entrée et la troisième sortie du troisième circuit sont respectivement connectées à deux des orifices externes de soupape (B1~B3) de la soupape (10).

9. Système de gestion thermique (100) selon la revendication 8, dans lequel,
un premier joint en T est disposé entre une sortie du moteur de traction (30) et une entrée du radiateur (40), les orifices d'entrée et de sortie du premier joint en T sont respectivement connectés à trois des orifices internes de soupape (A1, A2, A6) de la soupape (10) ;
un deuxième joint en T est disposé entre une sortie de la batterie (50) et une entrée du refroidisseur (60), les orifices d'entrée et de sortie du deuxième joint en T sont respectivement connectés aux trois autres orifices internes de soupape (A3, A4, A5) de la soupape (10) ;
un troisième joint en T est disposé entre la sortie de l'élément chauffant (70) et l'entrée du noyau de réchauffage par soufflerie (80), les orifices d'entrée et de sortie du troisième joint en T sont respectivement connectés aux trois orifices externes de soupape (B1~B3) de la soupape (10).

10. Système de gestion thermique (100) selon la revendication 9, dans lequel le refroidisseur est doté d'un premier chemin de fluide (62), d'un deuxième chemin de fluide (64) et d'un troisième chemin de fluide (66) ; le premier chemin de fluide (62) est connecté entre le troisième joint en T et l'orifice externe de soupape correspondant (B3) de la soupape ; le deuxième chemin de fluide (64) est connecté entre le deuxième joint en T et l'un correspondant des orifices internes de soupape (A4) ; le troisième chemin de fluide (66) est prévu pour l'écoulement du réfrigérant.

11. Système de gestion thermique (100) selon la revendication 10, dans lequel le refroidisseur (60) est composé de deux unités d'échange de chaleur dont l'une est dotée du premier chemin de fluide (62) et du deuxième chemin de fluide (64), et l'autre est dotée du deuxième chemin de fluide (64) et du troisième chemin de fluide (66).

12. Système de gestion thermique (100) selon la revendication 9, dans lequel,
la pluralité des orifices internes de soupape (A1~A6) comprend un premier orifice interne de soupape (A1), un deuxième orifice interne de soupape (A2), un troisième orifice interne de soupape (A3), un quatrième orifice interne de soupape (A4), un cinquième orifice interne de soupape (A5) et un sixième orifice interne de soupape (A6), le premier orifice interne de soupape (A1) est situé entre le deuxième orifice interne de soupape (A2) et le troisième orifice interne de soupape (A3) dans une direction circonférentielle, et le quatrième orifice interne de soupape (A4) est situé entre le cinquième orifice interne de soupape (A5) et le sixième orifice interne de soupape (A6) dans une direction circonférentielle ;
la pluralité des orifices externes de soupape (B1~B3) comprend un premier orifice externe de soupape (B1), un deuxième orifice externe de soupape (B2) et un troisième orifice externe de soupape (B3), et le premier orifice externe de soupape (B1) est situé entre le deuxième orifice externe de soupape (B2) et le troisième orifice externe de soupape (B3) dans une direction circonférentielle ;
la première entrée, la première sortie du premier circuit de fluide et le premier joint en T sont directement connectés respectivement au premier orifice interne de soupape (A1), au deuxième orifice interne de soupape (A2) et au sixième orifice interne de soupape (A6) ;
la deuxième entrée, la deuxième sortie du deuxième circuit de fluide et le deuxième joint en T sont directement connectés respectivement au quatrième orifice interne de soupape (A4), au cinquième orifice interne de soupape (A5) et au troisième orifice interne de soupape (A3) ;
la troisième entrée et la troisième sortie du troisième circuit de fluide sont respectivement connectées au deuxième orifice externe de soupape (B2) et au premier orifice externe de soupape (B1), et le troisième joint en T est connecté au troisième orifice externe de soupape (B3) via le refroidisseur (60).

13. Système de gestion thermique (100) selon la revendication 12, dans lequel le système de gestion thermique (100) est configuré pour être commuté entre au moins les modes suivants :
un premier mode de fonctionnement, dans lequel le premier orifice interne de soupape (A1) de la soupape est en communication fluidique avec le deuxième orifice interne de soupape (A2), et le quatrième orifice interne de soupape est en communication avec le cinquième orifice interne de soupape (A5), et le premier orifice externe de soupape (B1) est en communication avec le deuxième orifice externe de soupape (B2) ;
un deuxième mode de fonctionnement, dans lequel le premier orifice interne de soupape (A1) de la soupape est en communication fluidique avec le deuxième orifice interne de soupape (A2), et le quatrième orifice interne de soupape est en communication fluidique avec le cinquième orifice interne de soupape (A5), et le premier orifice externe de soupape (B1) est en communication fluidique avec le troisième orifice externe de soupape (B3) ;
un troisième état de fonctionnement, dans lequel le premier orifice interne de soupape (A1) de la soupape est en communication fluidique avec le troisième orifice interne de soupape (A3), et le quatrième orifice interne de soupape est en communication fluidique avec le sixième orifice interne de soupape (A6), et le premier orifice externe de soupape (B1) est en communication fluidique avec le deuxième orifice externe de soupape (B2) ;
un quatrième mode de fonctionnement, dans lequel le premier orifice interne de soupape (A1) de la soupape est en communication fluidique avec le cinquième orifice interne de soupape (A5), le quatrième orifice interne de soupape est en communication fluidique avec le deuxième orifice interne de soupape (A2), et le premier orifice externe de soupape (B1) est en communication fluidique avec le deuxième orifice externe de soupape (B2) ;
un cinquième mode de fonctionnement : dans lequel le premier orifice interne de soupape (A1) de la soupape est en communication fluidique avec le deuxième orifice interne de soupape (A2), le quatrième orifice interne de soupape est en communication fluidique avec le cinquième orifice interne de soupape (A5), et le premier orifice externe de soupape (B1) est en communication fluidique à la fois simultanément avec le deuxième orifice externe de soupape (B2) et le troisième orifice externe de soupape (B3) ;
un sixième mode de fonctionnement, dans lequel le premier orifice interne de soupape (A1) est en communication fluidique à la fois simultanément avec le troisième orifice interne de soupape (A3) et le cinquième orifice interne de soupape (A5) de la soupape ; le quatrième orifice interne de soupape est en communication fluidique à la fois simultanément avec le deuxième orifice interne de soupape (A2) et le sixième orifice interne de soupape (A6) ; le premier orifice externe de soupape (B1) est en communication fluidique à la fois simultanément avec le deuxième orifice externe de soupape (B2) et le troisième orifice externe de soupape (B3).

14. Système de gestion thermique (100) selon la revendication 13, dans lequel un rapport de débit via le deuxième orifice externe de soupape (B2) et le troisième orifice externe de soupape (B3) est ajustable en réponse au fait que le premier orifice externe de soupape (B1) est en communication fluidique à la fois simultanément avec le deuxième orifice externe de soupape (B2) et le troisième orifice externe de soupape (B3).
